# EUROPEAN PATENT SPECIFICATION

(11) **EP 4 072 084 B1**
(45) Date of publication and mention of the grant of the patent: **03.09.2025**
(21) Application number: 19958056.4
(22) Date of filing: 25.12.2019
(51) Int. Cl.: H04L 47/125, H04L 47/56, H04L 47/625, H04L 47/6295, H04L 49/9005, H04L 49/9015, H04L 49/90, H04L 49/9023, H04L 49/9047, H04L 47/11, H04L 47/34

(54) **MESSAGE BUFFERING METHOD, INTEGRATED CIRCUIT SYSTEM, AND STORAGE MEDIUM**
NACHRICHTENPUFFERVERFAHREN, INTEGRIERTES SCHALTUNGSSYSTEM UND SPEICHERMEDIUM
PROCÉDÉ DE MISE EN MÉMOIRE TAMPON DE MESSAGES, SYSTÈME DE CIRCUIT INTÉGRÉ ET SUPPORT DE STOCKAGE

(43) Date of publication of application: 12.10.2022
(73) Proprietor: Huawei Technologies Co., Ltd., Shenzhen, Guangdong 518129, (CN)
(72) Inventor: WEI, Hua, Shenzhen, Guangdong 518129 (CN); BIAN, Yunfeng, Shenzhen, Guangdong 518129 (CN); WANG, Xiaozhong, Shenzhen, Guangdong 518129 (CN)
(74) Representative: Maiwald GmbH
(86) International application number: PCT/CN2019/128473
(87) International publication number: WO 2021/128104

(56) References cited:
- CN-A- 106 385 379
- CN-A- 108 234 348
- CN-A- 108 874 688
- US-A1- 2005 240 745
- US-A1- 2013 128 896
- US-A1- 2017 005 953
- US-A9- 2019 079 865
- JINDOU FAN ET AL: "Reducing power of traffic manager in routers via dynamic on/off-chip scheduling", INFOCOM, 2012 PROCEEDINGS IEEE, IEEE, 25 March 2012 (2012-03-25), pages 1925 - 1933, XP032178930, ISBN: 978-1-4673-0773-4, DOI: 10.1109/INFCOM.2012.6195569

## Description

### TECHNICAL FIELD

This application relates to the field of data communication, and in particular, to a packet buffering method, an integrated circuit system, and a storage medium.

### BACKGROUND

A device in a communication network may receive a packet transmitted by another device, and store the received packet in an on-chip buffer or an external buffer. The on-chip buffer is a buffer inside a host chip of the device. The external buffer is a buffer outside the host chip. The on-chip buffer features a large bandwidth and a small capacity, and the external buffer features a small bandwidth and a large capacity.

In a current packet buffering solution, the on-chip buffer may be divided into a plurality of storage spaces, and the plurality of storage spaces are in a one-to-one correspondence with packets with a plurality of priorities. After the device receives a packet, if a storage space corresponding to a priority of the packet in the on-chip buffer is sufficient for storing the packet, the device buffers the packet in the on-chip buffer. If the storage space is insufficient for storing the packet, the device buffers the packet in the external buffer.

Packets may be classified into a congested packet and a non-congested packet. The non-congested packet is a packet that occupies a buffer for a short time, that is, the packet is read quickly after being buffered. The congested packet is a packet that occupies a buffer for a long time, that is, the packet needs a long time to be read after being buffered. In the foregoing solution, the congested packet and the non-congested packet are not distinguished. This may result in a problem that a large quantity of congested packets are buffered in the on-chip buffer, and a large quantity of non-congested packets are buffered in the external buffer. In this case, as the bandwidth of the external buffer is small, non-congested packets may be discarded due to the insufficient bandwidth of the external buffer.

To resolve the foregoing problem, another packet buffering solution is proposed. In this solution, the device may use a queue depth of each queue as an indicator for determining a queue congestion status, and allocate a storage space to each queue in the on-chip buffer based on the queue depth of each queue, where each queue is used to buffer a packet. Congestion of a packet in a queue may be reflected as a congestion status of the queue. A greater queue depth of a queue indicates a severer congestion status of the queue, and a smaller storage space is allocated to the queue. However, the queue depth of the queue is not the only indicator that reflects the congestion status of the queue, and cannot accurately reflect the congestion status of the queue. Therefore, by using the foregoing solution, non-congested packets may still be buffered in the external buffer as congested packets. As a result, non-congested packets are discarded due to the insufficient bandwidth of the external buffer. The US 2013 / 0 128 896 A1 refers to a network switch with external buffering via looparound path. The US 2017 / 0 005 953 A1 refers to a hierarchical packet buffer system. The US 2005 / 0 240 745 A1 refers to a high speed memory control and I/O processor system.

In conclusion, congested packets and non-congested packets in queues cannot be accurately distinguished based on queue depths. As a result, the on-chip buffer cannot be properly allocated, leading to low utilization of the on-chip buffer.

### SUMMARY

This application provides a packet buffering method, an integrated circuit system, and a storage medium. This can properly allocate an on-chip buffer and improve utilization of the on-chip buffer. The present application is defined in the appended independent claims. Further implementations are disclosed in the pending independent claims. In the following, implementations not falling within the scope of the claims are to be understood as examples useful for understanding the claims.

To achieve the foregoing technical objective, this application uses the following technical solutions.

According to a first aspect, this application provides a packet buffering method. The method may be applied to a network device. The network device includes a first storage medium and a second storage medium. The first storage medium is inside a chip of a processor of the network device, and the second storage medium is outside the chip of the processor. The method may include:
receiving a first packet, and identifying a queue number of the first packet, where the queue number indicates a queue for storing a buffer address of the first packet; querying a queue latency of the queue based on the queue number; querying usage of the first storage medium, and determining a first latency threshold based on the usage; and buffering the first packet in the first storage medium if the queue latency is less than the first latency threshold, or buffering the first packet in the second storage medium if the queue latency is greater than the first latency threshold.
It may be understood that buffer addresses of a plurality of packets are stored in the queue. A time length during which a packet in the queue occupies a buffer may indicate a current congestion status of the queue. The queue latency is the time length during which a packet in the queue occupies a buffer. Therefore, the queue latency may indicate the congestion status of the queue. In addition, a queue depth is a quantity of packets waiting to be sent for a input/output operation in a queue, that is, an instruction sequence sent by the queue to a storage device each time. Thequeue depth cannot reflect a time length during which a packet in the queue occupies a buffer. Therefore, the congestion status of the queue may be accurately determined based on the queue latency.

The first storage medium includes a buffer inside a host chip of a storage device, and the second storage medium is not a buffer inside the host chip. For example, the first storage medium may be an on-chip buffer, and the second storage medium may be an external buffer. The on-chip buffer features a large bandwidth and a small capacity, and the external buffer features a large capacity and a small bandwidth. If the queue latency is less than the first latency threshold, it indicates that the queue is a non-congested queue, and the first packet can be buffered in the on-chip buffer. If the queue latency is greater than the first latency threshold, it indicates that the queue is a congested queue, and the first packet can be buffered in the external buffer.

In conclusion, the queue latency can reflect the congestion status of the queue. Therefore, in this application, a queue latency is used as an indicator for determining a congestion status of a queue. This can accurately determine a congestion status of the queue, ensure that a non-congested packet is buffered in the on-chip buffer, reduce a risk that the on-chip buffer is fully occupied by congested packets, properly utilize the on-chip buffer, and improve utilization of the on-chip buffer.

In a possible implementation, before the buffering the first packet in the first storage medium if the queue latency is less than the first latency threshold, or buffering the first packet in the second storage medium if the queue latency is greater than the first latency threshold, the method further includes: determining that a second packet is buffered in the first storage medium. A packet header of the second packet includes the queue number of the queue, and a buffer address of the second packet is a previous element enqueued in the queue in which the buffer address of the first packet is enqueued.

In another possible implementation, the packet buffering method further includes: determining that the second packet is buffered in the second storage medium; and buffering the first packet in the first storage medium if the queue latency is less than a second latency threshold, or buffering the first packet in the second storage medium if the queue latency is greater than the second latency threshold. The second latency threshold is less than the first latency threshold, and a difference between the second latency threshold and the first latency threshold is a preset value.

It may be understood that the second packet is a previous packet enqueued in the queue in which the first packet is enqueued. If the second packet is buffered in the second storage medium, for the on-chip buffer, the second packet is a congested packet, and the queue is a congested queue. After receiving the first packet, the network device buffers the first packet in the on-chip buffer if the queue latency is less than a second preset threshold. The second preset threshold is less than the first preset threshold. This can improve an indicator for determining whether the first packet is a congested packet, ensure that a non-congested packet is buffered in the on-chip buffer, further reduce a risk that the on-chip buffer is fully occupied by congested packets, and improve utilization of the on-chip buffer.

In another possible implementation, the queue latency of the queue is a packet latency of a third packet. The third packet is a previous packet dequeued from the queue, and the packet latency is determined based on a time difference between a dequeue time point and an enqueue time point of a buffer address of the third packet in the queue.

It may be understood that the queue latency of the queue is determined based on the time difference between the enqueue time point and the dequeue time point of the third packet in the queue, that is, the queue latency is a time length during which the third packet occupies a storage medium. The third packet is a latest packet dequeued from the queue. The time length during which the third packet occupies a buffer can reflect a congestion status of the third packet. The queue may include a plurality of packets, and a time length during which each packet occupies a buffer may reflect the congestion status of the queue. A time length during which a packet occupies a buffer, namely, a congestion status of the packet, can be determined only after the packet is dequeued from the queue. Therefore, the congestion status of the latest packet dequeued from the queue may indicate a current congestion status of the queue.

In another possible implementation, the network device includes a queue latency table of the queue, and the queue latency table includes an enqueue time point and a dequeue time point of a previous packet dequeued from the queue. The packet buffering method further includes:
adding a first time stamp to the third packet before buffering the third packet in the first storage medium or the second storage medium, where the first time stamp is the enqueue time point of the third packet; adding the buffer address of the third packet to the queue; and after receiving a request for reading the third packet, reading the third packet from the first storage medium or the second storage medium based on the buffer address, identifying the first time stamp in the third packet, determining a second time stamp, and recording the first time stamp and the second time stamp in the queue latency table. The second time stamp is the dequeue time point of the third packet, and a global time of the network device.

In another possible implementation, the packet latency is the time difference between the dequeue time point and the enqueue time point of the buffer address of the third packet in the queue, or a latency class determined based on the time difference between the dequeue time point and the enqueue time point of the buffer address of the third packet in the queue. The network device stores a plurality of latency classes and a time difference corresponding to each latency class.

In another possible implementation, the network device includes an occupation status table of the first storage medium. The occupation status table of the first storage medium includes an occupied storage space of the first storage medium and a latency threshold corresponding to the occupied storage space. Therefore, the querying usage of the first storage medium, and determining a first latency threshold based on the usage may include: querying the usage of the first storage medium, to determine the occupied storage space corresponding to the usage; and determining that the latency threshold corresponding to the occupied storage space is the first latency threshold.

In another possible implementation, before the buffering the first packet in the second storage medium, the method further includes: obtaining backpressure information of the second storage medium. When the backpressure information is a first value, it indicates that a bandwidth of the second storage medium is sufficient to buffer the first packet. The bandwidth of the second storage medium indicates a data amount stored by the second storage medium per unit time period. The buffering the first packet in the second storage medium includes: if the backpressure information is the first value, buffering the first packet in the second storage medium.

In another possible implementation, when the backpressure information is a second value, it indicates that the bandwidth of the second storage medium is insufficient to buffer the first packet. The method further includes: if the backpressure information is the second value, discarding the first packet.

The backpressure information indicates buffer pressure of the external buffer, and a bandwidth of the external buffer is small. If the backpressure information is the first value, it indicates that the bandwidth of the external buffer meets a requirement of a line-rate bandwidth of a system, and the bandwidth of the external buffer is sufficient to buffer the first packet. If the backpressure information is the second value, it indicates that the bandwidth of the external buffer cannot meet the requirement of the line-rate bandwidth of the system, and the bandwidth of the external buffer is insufficient to buffer the first packet. In this case, the first packet is discarded.

According to a second aspect, this application further provides an integrated circuit system. The integrated circuit system may include a packet write control PWC module, a queue manager QM, and a packet memory control PMC module. The PMC includes a first storage medium, and the PMC is connected to a second storage medium.

The PWC is configured to receive a first packet, and identify a queue number of the first packet. The queue number indicates a queue for storing a buffer address of the first packet.

The QM is configured to: query a queue latency of the queue based on the queue number, query usage of the first storage medium, determine a first latency threshold based on the usage, and if the QM determines that the queue latency is less than the first latency threshold, send first indication information to the PWC, to indicate the PWC to request the PMC to buffer the first packet in the first storage medium, or if the QM determines that the queue latency is greater than the first latency threshold, send second indication information to the PWC, to indicate the PWC to request the PMC to buffer the first packet in the second storage medium.

It may be understood that the queue manager QM compares the queue latency with the first latency threshold, and determines the buffer address of the first packet based on a comparison result. For example, the first storage medium may be an on-chip buffer, and the second storage medium may be an external buffer. The queue latency can reflect a congestion status of the queue. Therefore, in this application, a queue latency is used as an indicator for determining a congestion status of a queue. This can accurately determine a congestion status of the queue. If the queue latency is less than the first latency threshold, it indicates that the queue is a non-congested queue, and the first packet can be buffered in the on-chip buffer. If the queue latency is greater than the first latency threshold, it indicates that the queue is a congested queue, and the first packet can be buffered in the external buffer. This can ensure that a non-congested packet is buffered in the on-chip buffer, reduce a risk that the on-chip buffer is fully occupied by congested packets, properly utilize the on-chip buffer, and improve utilization of the on-chip buffer.

In a possible implementation, the QM is further configured to: before sending the first indication information or the second indication information to the PWC, determine that a second packet is buffered in the first storage medium. A packet header of the second packet includes the queue number of the queue, and a buffer address of the second packet is a previous element enqueued in the queue in which the buffer address of the first packet is enqueued.

In another possible implementation, the QM is further configured to determine that the second packet is buffered in the second storage medium. Then, if the QM determines that the queue latency is less than a second latency threshold, the QM sends the first indication information to the PWC, to indicate the PWC to request the PMC to buffer the first packet in the first storage medium. If the QM determines that the queue latency is greater than the second latency threshold, the QM sends the second indication information to the PWC, to indicate the PWC to request the PMC to buffer the first packet in the second storage medium. The second latency threshold is less than the first latency threshold, and a difference between the second latency threshold and the first latency threshold is a preset value.

In another possible implementation, the queue latency of the queue is a packet latency of a third packet. The third packet is a previous packet dequeued from the queue, and the packet latency is determined based on a time difference between a dequeue time point and an enqueue time point of a buffer address of the third packet in the queue.

In another possible implementation, the integrated circuit system further includes a packet read control PRC module, the PRC stores a queue latency table of the queue, the queue latency table of the queue stores an enqueue time point and a dequeue time point of a packet corresponding to the queue. The QM stores the queue.

The PWC is further configured to add a first time stamp to the third packet before requesting the PMC to buffer the first packet in the first storage medium or the second storage medium. The first time stamp is the enqueue time point of the third packet.

The QM is further configured to: add the buffer address of the third packet to the queue, and if the QM receives a request for reading the third packet, send the request for reading the third packet and the buffer address of the third packet to the PRC.

The PRC is configured to: after receiving the request for reading the third packet from the QM, read the third packet from the first storage medium or the second storage medium based on the buffer address of the third packet, determine the first time stamp in the third packet, determine a second time stamp, and record the first time stamp and the second time stamp in the queue latency table. The second time stamp is a global time of a network device, and the dequeue time point of the buffer address of the first packet in the queue.

In another possible implementation, the packet latency is the time difference between the dequeue time point and the enqueue time point of the buffer address of the third packet in the queue, or a latency class determined based on the time difference between the dequeue time point and the enqueue time point of the buffer address of the third packet in the queue. The network device stores a plurality of latency classes and a time difference corresponding to each latency class.

In another possible implementation, the integrated circuit system stores an occupation status table of the first storage medium. The occupation status table of the first storage medium includes an occupied storage space of the first storage medium and a latency threshold corresponding to the occupied storage space. When the QM is configured to query the usage of the first storage medium, and determine the first latency threshold based on the usage, the QM is specifically configured to: query the usage of the first storage medium, determine the occupied storage space corresponding to the usage, and determine that the latency threshold corresponding to the occupied storage space is the first latency threshold.

In another possible implementation, before the QM sends the second indication information to the PWC, the PMC is further configured to: obtain backpressure information of the second storage medium, and send the backpressure information to the QM. When the backpressure information is a first value, it indicates that a bandwidth of the second storage medium is sufficient to buffer the first packet. The bandwidth of the second storage medium indicates a data amount stored by the second storage medium per unit time period.

The QM is further configured to: receive the backpressure information sent by the PMC, and if the QM determines that the backpressure information is the first value, send the second indication information to the PWC.

In another possible implementation, when the backpressure information is a second value, it indicates that the bandwidth of the second storage medium is insufficient to buffer the first packet. The QM is further configured to: if the QM determines that the backpressure information is the second value, send third indication information to the PMC. The third indication information indicates the PMC to discard the first packet. The PMC is further configured to: receive the third indication information from the QM, and discard the first packet based on the third indication information.

According to a third aspect, this application further provides an integrated circuit system. The integrated circuit system includes a processor, a first storage medium, and a second storage medium. The processor is configured to:
receive a first packet, and identify a queue number of the first packet, where the queue number indicates a queue for storing a buffer address of the first packet; query a queue latency of the queue based on the queue number; query usage of the first storage medium, and determine a first latency threshold based on the usage; and buffer the first packet in the first storage medium if the queue latency is less than the first latency threshold, or buffer the first packet in the second storage medium if the queue latency is greater than the first latency threshold.

In a possible implementation, the processor is further configured to: before buffering the first packet in the first storage medium if the queue latency is less than the first latency threshold, or buffering the first packet in the second storage medium if the queue latency is greater than the first latency threshold, determine that a second packet is buffered in the first storage medium. A packet header of the second packet includes the queue number of the queue, and a buffer address of the second packet is a previous element enqueued in the queue in which the buffer address of the first packet is enqueued.

In another possible implementation, the processor is further configured to: determine that the second packet is buffered in the second storage medium; and buffer the first packet in the first storage medium if the queue latency is less than a second latency threshold, or buffer the first packet in the second storage medium if the queue latency is greater than the second latency threshold. The second latency threshold is less than the first latency threshold, and a difference between the second latency threshold and the first latency threshold is a preset value.

In another possible implementation, the queue latency of the queue is a packet latency of a third packet. The third packet is a previous packet dequeued from the queue, and the packet latency is determined based on a time difference between a dequeue time point and an enqueue time point of a buffer address of the third packet in the queue.

In another possible implementation, the network device includes a queue latency table of the queue, the queue latency table includes an enqueue time point and a dequeue time point of a previous packet dequeued from the queue. The processor is further configured to:
add a first time stamp to the third packet before buffering the third packet in the first storage medium or the second storage medium, where the first time stamp is the enqueue time point of the third packet; add the buffer address of the third packet to the queue; and after receiving a request for reading the third packet, read the third packet from the first storage medium or the second storage medium based on the buffer address, identify the first time stamp in the third packet, determine a second time stamp, and record the first time stamp and the second time stamp in the queue latency table. The second time stamp is the dequeue time point of the third packet, and a global time of the network device.

In another possible implementation, the packet latency is the time difference between the dequeue time point and the enqueue time point of the buffer address of the third packet in the queue, or a latency class determined based on the time difference between the dequeue time point and the enqueue time point of the buffer address of the third packet in the queue. The network device stores a plurality of latency classes and a time difference corresponding to each latency class.

In another possible implementation, the network device includes an occupation status table of the first storage medium. The occupation status table of the first storage medium includes an occupied storage space of the first storage medium and a latency threshold corresponding to the occupied storage space. Therefore, the processor is further configured to: query the usage of the first storage medium, to determine the occupied storage space corresponding to the usage; and determine that the latency threshold corresponding to the occupied storage space is the first latency threshold.

In another possible implementation, the processor is further configured to: obtain backpressure information of the second storage medium, where when the backpressure information is a first value, it indicates that a bandwidth of the second storage medium is sufficient to buffer the first packet, and the bandwidth of the second storage medium indicates a data amount stored by the second storage medium per unit time period; and if the backpressure information is the first value, buffer the first packet in the second storage medium.

In another possible implementation, when the backpressure information is a second value, it indicates that the bandwidth of the second storage medium is insufficient to buffer the first packet. The processor is further configured to: if the backpressure information is the second value, discard the first packet.

The backpressure information indicates buffer pressure of the external buffer, and a bandwidth of the external buffer is small. If the backpressure information is the first value, it indicates that the bandwidth of the external buffer meets a requirement of a line-rate bandwidth of a system, and the bandwidth of the external buffer is sufficient to buffer the first packet. If the backpressure information is the second value, it indicates that the bandwidth of the external buffer cannot meet the requirement of the line-rate bandwidth of the system, and the bandwidth of the external buffer is insufficient to buffer the first packet. In this case, the first packet is discarded.

According to a fourth aspect, this application further provides a computer-readable storage medium, including computer instructions. When the computer instructions are run on a network device, the network device is enabled to perform the method in any one of the first aspect and the possible implementations of the first aspect.

According to a fifth aspect, this application further provides a computer program product. When the computer program product runs on a computer, the computer is enabled to perform the method in any one of the first aspect and the possible implementations of the first aspect.

It may be understood that the integrated circuit system provided in the second aspect, the integrated circuit system provided in the third aspect, the computer-readable storage medium provided in the fourth aspect, or the computer program product provided in the fifth aspect are all configured to perform the method in any one of the first aspect and the possible implementations of the first aspect. Therefore, for an effective effect that can be achieved by the integrated circuit system provided in the second aspect, the integrated circuit system provided in the third aspect, the computer-readable storage medium provided in the fourth aspect, or the computer program product provided in the fifth aspect, refer to beneficial effects in a corresponding method. Details are not described herein again.

### BRIEF DESCRIPTION OF DRAWINGS

FIG. 1 is a schematic diagram of a structure of a network device according to an embodiment of this application;
FIG. 2 is a flowchart of a packet buffering method according to an embodiment of this application;
FIG. 3 is a schematic diagram of a structure of an integrated circuit system according to an embodiment of this application;
FIG. 4 is a flowchart of another packet buffering method according to an embodiment of this application; and
FIG. 5 is a schematic diagram of a structure of another integrated circuit system according to an embodiment of this application.

### DESCRIPTION OF EMBODIMENTS

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more than two.

The following explains communication terms that may be used in this application:

An external buffer (EB) is a buffer configured outside a host chip. The external buffer may include a dynamic random access memory (DRAM) as a storage medium, and common external buffers include a double data rate synchronous dynamic random access memory (DDR SDRAM), a graphics double data rate (GDDR), a high bandwidth memory (HBM), and the like.

An on-chip buffer (OCB), also referred to as local buffer, is a buffer configured inside a host chip. Generally, the on-chip buffer is also called a cache. The on-chip buffer may exist in a medium form of a static random access memory (SRAM).

A bandwidth convergent system (BCS) is a system whose bandwidth of an external buffer is smaller than a line-rate bandwidth of the system.

A line rate is a maximum data throughput between a switch interface processor or an interface card and a data bus in a network device. It indicates a maximum data amount switched and forwarded by the network device in an ideal case.

A line-rate bandwidth indicates a current data throughput between a switch interface processor or an interface card and a data bus in a network device. It indicates a data amount switched and forwarded by the network device in a current case.

A convergence ratio (CR) is a ratio of a bandwidth of an external buffer to a line-rate bandwidth of a system. For a bandwidth convergence system, the convergence ratio is a value less than 1. For example, a convergence ratio of 0.9 indicates that an external buffer can provide a bandwidth equal to 90% of a line-rate bandwidth of a system.

A packet descriptor (PD) is classified into a local packet descriptor (LPD) and an external packet descriptor (EPD). The LPD indicates continuous storage spaces of an on-chip buffer, and the EPD indicates continuous storage spaces of an external buffer. Sizes of storage spaces of the LPD and the EPD may be different. As packets are packed, the LPD and the EPD each may include a plurality of independent packets.

A queue depth is a quantity of packets waiting to be sent for an input/output (I/O) operation in a queue of a network device.

Generally, after receiving a packet, a storage device may buffer the received packet in an on-chip buffer or an external buffer. The storage device may determine a buffer address (for example, the on-chip buffer or the external buffer) of the packet based on a congestion status of the packet. If the packet is a congested packet, the storage device may store the packet in the external buffer; or if the packet is a non-congested packet, the storage device may store the packet in the on-chip buffer.

It may be understood that a time length during which a packet occupies a buffer may indicate a congestion degree of the packet. If the packet occupies the buffer for a long time, it is determined that the packet is a congested packet. The time length during which a packet occupies a buffer can be determined only after the packet is dequeued, that is, the packet leaves the buffer. If all packets dequeued from a queue are congested packets, it may be determined that the queue is a congested queue. After determining that a first packet is received, the storage device may determine a congestion status of the first packet based on a congestion status of a queue in which the first packet is enqueued. If the queue in which the first packet is enqueued is a congested queue, the first packet is a congested packet. If the queue in which the first packet is enqueued is a non-congested queue, the first packet is a non-congested packet.

In some implementations, a queue depth may be used as an indicator for determining a congestion status of a queue. For example, if the queue depth is greater than a preset threshold, it is determined that the queue is a congested queue.

For example, different storage thresholds are set in the on-chip buffer based on different queue depths. If a preset threshold of a first queue depth is a first preset threshold, and queue depths of a first queue and a second queue are both the first queue depth, a total buffer space of packets in the first queue and packets in the second queue in the on-chip buffer is a buffer space corresponding to the first preset threshold. For example, after the storage device receives a packet in the first queue, if usage of the queue depth in the on-chip buffer is less than the storage threshold of the queue depth, the storage device may buffer the packet in the first queue in the on-chip buffer. If the usage of the queue depth in the on-chip buffer exceeds the storage threshold of the queue depth, the storage device buffers the packet in the first queue in the external buffer.

It may be understood that the queue depth indicates a quantity of concurrent input/output operations sent by the queue to the storage device each time, namely, instruction sequences sent by the queue to the storage device each time. A larger queue depth of a queue indicates more instruction sequences sent by the queue to the storage device each time, and the queue is more likely to become a congested queue.

An input bandwidth of a queue also affects a congestion status of the queue. If a congestion status of a queue is determined only based on a queue depth, congestion statuses of two queues with a same queue depth may be different. For example, two queues (for example, a first queue and a second queue) have a same queue depth, and usage of packets in the two queues in an on-chip buffer does not exceed a storage threshold corresponding to the queue depth. In this case, both the packet in the first queue and the packet in the second queue may be stored in the on-chip buffer. If output bandwidths of the two queues are different, a time length during which the packet in the first queue occupies a buffer is different from a time length during which the packet in the second queue occupies a buffer. In this case, a queue latency of the first queue is also different from a queue latency of the second queue, that is, a congestion status of the first queue is also different from a congestion status of the second queue. Therefore, when a queue depth is used as an indicator for determining a congestion status of a queue, the congestion status of the queue cannot be accurately determined based on the queue depth.

It should be noted that, queue latency = queue depth/output bandwidth of a queue. In embodiments of this application, a congestion status of a queue is determined based on a queue latency. The queue latency indicates a time length during which a packet in the queue occupies a buffer. For example, a packet in a queue with a short queue latency occupies a buffer for a short time, and a packet in a queue with a long queue latency occupies a buffer for a long time. The time length during which a packet in the queue occupies a buffer indicates a congestion degree of the queue. Therefore, the congestion status of the queue can be accurately determined based on the queue latency.

An embodiment of this application provides a packet buffering method, and the method may be applied to a network device. The network device receives a first packet and queries a queue latency of a queue based on a queue number in a packet header of the first packet. The queue latency of the queue is a packet latency of a third packet that is a latest packet dequeued from the queue. Then, a storage device queries usage of an on-chip buffer, and determines a first latency threshold based on the usage of the on-chip buffer. If the queue latency is less than the first latency threshold, the first packet is buffered in the on-chip buffer. If the queue latency is greater than the first latency threshold, the first packet is buffered in an external buffer.

Implementation of the method in this embodiment of this application can ensure that a packet with a short queue latency is buffered in the on-chip buffer, reduce a risk that the on-chip buffer is fully occupied by congested packets, properly utilize the on-chip buffer, and improve utilization of the on-chip buffer.

The method in this embodiment of this application may be applied to the network device. Therefore, the packet buffering method provided in this embodiment of this application may be performed by the network device. For example, the network device may be a mobile phone, a tablet computer, a desktop, a laptop, a handheld computer, a notebook computer, an ultra-mobile personal computer (UMPC), a netbook, a cellular phone, a personal digital assistant (PDA), an augmented reality (AR)/virtual reality (VR) device, or the like. A specific form of the network device is not specifically limited in embodiments of this application. In this embodiment of this application, the packet buffering method provided in this embodiment of this application is described by using an example in which the packet buffering method is performed by the network device.

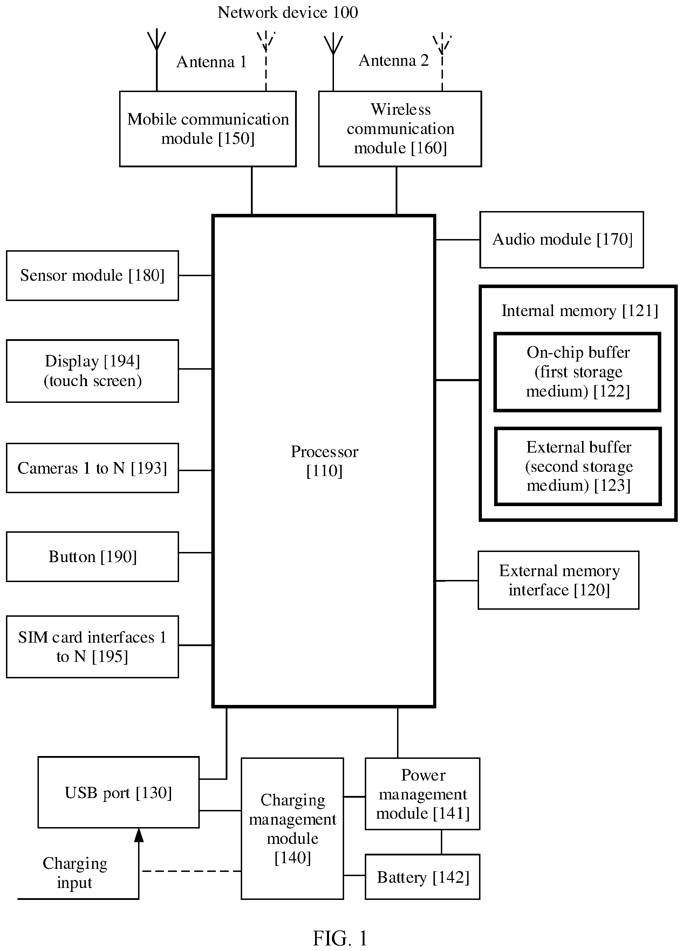

The following describes implementations of embodiments of this application in detail with reference to the accompanying drawings. As shown in FIG. 1, a network device 100 may include: a processor 110, an external memory interface 120, an internal memory 121, a universal serial bus (USB) port 130, a charging management module 140, a power management module 141, a battery 142, an antenna 1, an antenna 2, a mobile communication module 150, a wireless communication module 160, an audio module 170, a sensor module 180, a button 190, a camera 193, a display 194, a subscriber identity module (SIM) card interface 195, and the like.

The internal memory (or a storage device) 121 includes an on-chip buffer (which may be alternatively referred to as a first storage medium) 122 and an external buffer (which may be alternatively referred to as a second storage medium) 123. The on-chip buffer 122 is a buffer configured in the processor 110, and the external buffer 123 is a buffer configured outside the processor 110.

It may be understood that the structure shown in this embodiment does not constitute a specific limitation on the network device 100. In some other embodiments, the network device 100 may include more or fewer components than those shown in FIG. 1, or some components may be combined, or some components may be split, or different component arrangements may be used. The components shown in FIG. 1 may be implemented by using hardware, software, or a combination of software and hardware.

The processor 110 may include one or more processing units. For example, the processor 110 may include an application processor (AP), a modem processor, a graphics processing unit (GPU), an image signal processor (ISP), a controller, the on-chip buffer 122, a video codec, a digital signal processor (DSP), a baseband processor, a neural-network processing unit (NPU), and/or the like. Different processing units may be independent components, or may be integrated into one or more processors.

The controller may be a nerve center and a command center of the network device 100. The controller may generate an operation control signal based on instruction operation code and a time sequence signal, to complete control of instruction reading and instruction execution.

The on-chip buffer 122 may be further disposed in the processor 110, and is configured to store instructions and data. In some embodiments, the on-chip buffer 122 in the processor 110 is a cache storage medium. The on-chip buffer 122 may store instructions or data that is just used or cyclically used by the processor 110. If the processor 110 needs to use the instructions or the data again, the processor 110 may directly invoke the instructions or the data from the on-chip buffer 122. This avoids repeated access, reduces a waiting time period of the processor 110, and improves system efficiency. In some embodiments, when buffering a packet received by the network device, the processor 110 buffers the packet in the on-chip buffer 122. If the packet needs to be read, the packet is directly read from the on-chip buffer 122.

In some embodiments, the processor 110 may include one or more interfaces. The interface may include an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, a universal serial bus (USB) port, and/or the like.

The external buffer 123 (which may be alternatively referred to as the second storage medium) may be configured to store computer-executable program code. The executable program code includes instructions. The processor 110 runs the instructions stored in the external buffer 123, to implement various functional applications and data processing of the network device 100. For example, in this embodiment of this application, the processor 110 may execute the instructions stored in the external buffer 123, and the external buffer 123 may include a program storage area and a data storage area. In some embodiments, the external buffer 123 may be configured to store a packet received by the network device. For example, after the network device receives the packet, the processor 110 determines to store the packet in the external buffer. If the packet is to be read, the packet is read from the external buffer.

The program storage area may store an operating system, an application required by at least one function (for example, a sound playing function or an image playing function), and the like. The data storage area may store data (such as audio data and an address book) created when the network device 100 is used, and the like. In addition, the internal memory 121 may include a high-speed random access memory, and may further include a nonvolatile memory such as at least one magnetic disk storage device, a flash memory, or a universal flash storage (UFS).

The external memory interface 120 may be configured to connect to an external memory card such as a Micro SD card, to extend a storage capability of the network device 100. The external storage card communicates with the processor 110 through the external memory interface 120, to implement a data storage function. For example, files such as music and video are stored in the external storage card.

It may be understood that an interface connection relationship between the modules that is shown in this embodiment is merely an example for description, and does not constitute a limitation on a structure of the network device 100. In some other embodiments of this application, the network device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is connected to the battery 142, the charging management module 140, and the processor 110. The power management module 141 receives an input of the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance).

A wireless communication function of the network device 100 may be implemented by using the antenna 1, the antenna 2, the mobile communication module 150, the wireless communication module 160, the modem processor, the baseband processor, and the like.

The network device 100 implements a display function by using the GPU, the display 194, the application processor, and the like. The GPU is a microprocessor for image processing, and is connected to the display 194 and the application processor. The GPU is configured to perform mathematical and geometric calculation, and render an image. The processor 110 may include one or more GPUs that execute program instructions to generate or change display information.

The display 194 is configured to display an image, video, and the like. The display 194 includes a display panel. The display panel may be a liquid crystal display (LCD), an organic light-emitting diode (OLED), an active-matrix organic light-emitting diode (AMOLED), a flexible light-emitting diode (FLED), a mini-LED, a micro-LED, a micro-OLED, a quantum dot light-emitting diode (QLED), or the like.

The network device 100 may implement a photographing function by using the ISP, the camera 193, the video codec, the GPU, the display 194, the application processor, and the like.

All methods in the following embodiments may be implemented on the network device 100 having the foregoing hardware structures. In embodiments of this application, the packet buffering method is described by using an example in which the packet buffering method is applied to the network device 100.

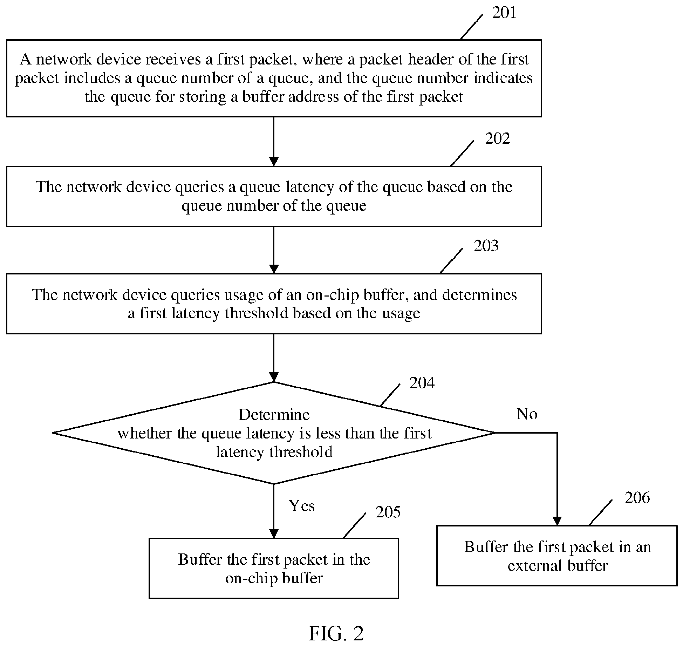

FIG. 2 is a flowchart of a packet buffering method according to an embodiment of this application. The method may be applied to the foregoing network device. As shown in FIG. 2, the packet buffering method includes step 201 to step 206. A memory (or a storage device) in the network device includes an on-chip buffer (or a first storage medium) and an external buffer (or a second storage medium). The on-chip buffer is a buffer configured inside a host chip, and the external buffer is a buffer configured outside the host chip.

Step 201: The network device receives a first packet, where a packet header of the first packet includes a queue number of a queue, and the queue number indicates the queue for storing a buffer address of the first packet.

The queue may also be referred to as a queue linked list. Each queue corresponds to a queue linked list, and the queue linked list (or the queue) is used to store a buffer address of a packet in the queue.

It may be understood that each queue may include a plurality of packets. A packet header of each packet includes a queue number of a queue in which the packet is enqueued, so that the network device may determine, based on the queue number of the packet, the queue in which the packet is enqueued.

For example, the network device may include a temporary buffer. Before the network device determines the buffer address of the first packet, the network device may temporarily store the first packet in the temporary buffer. For example, after receiving the first packet, the network device stores the first packet in the temporary buffer. After the network device determines the buffer address of the first packet, the network device reads the first packet from the temporary buffer.

Step 202: The network device queries a queue latency of the queue based on the queue number of the queue.

The queue may include a plurality of packets, and a time length during which each packet occupies a buffer may reflect a congestion status of the queue. A time length during which a packet occupies a buffer, namely, a congestion status of the packet, can be determined only after the packet is dequeued from the queue. Therefore, a congestion status of a latest packet dequeued from the queue may indicate a current congestion status of the queue.

For example, the latest packet dequeued from the queue is a third packet. The queue latency is a packet latency of the third packet in the queue. The packet latency is determined based on a time difference between a dequeue time point and an enqueue time point of a buffer address of the third packet in the queue.

For example, a latency list of each queue may be preset in the network device, and the latency list of each queue is used to record a packet latency of each packet in the queue. After receiving a packet of the queue, the network device may determine a queue latency of the queue by querying a packet latency corresponding to a latest dequeued packet in the latency list of the queue.

It may be understood that, when a queue obtains a dequeue opportunity, buffer addresses of packets in the queue are read from a first list one by one. After a buffer address of a packet in the queue is read from the first list, the queue may delete the buffer address of the packet. In the queue, a packet latency corresponding to each dequeued packet may be different. A congestion status of a packet in the queue may indicate a congestion status of the queue, and a packet latency corresponding to a latest packet dequeued from the queue may reflect a current queue latency of the queue. The packet latency corresponding to the latest packet dequeued from the queue is used as the queue latency of the queue. For example, if the third packet is the latest packet dequeued from the queue, the packet latency of the third packet may accurately indicate the congestion status of the queue.

For example, a queue is used to store buffer addresses of packets in the queue. The network device determines the buffer address of the third packet, and records the enqueue time point of the third packet when buffering the third packet to the corresponding buffer address. If the third packet is read, the network device reads the buffer address of the third packet from the queue and records the dequeue time point of the third packet.

In a first case, the packet latency of the third packet is the time difference between the dequeue time point and the enqueue time point of the buffer address of the third packet in the queue. If the enqueue time point of the buffer address of the third packet in the queue is T1 (for example, 15:30:20:30), and the dequeue time point of the buffer address of the third packet in the queue is T2 (for example, 15:30:25:30), the packet latency of the third packet is T2-T1, namely, 5 seconds.

In a second case, the packet latency of the third packet is a latency class determined based on the time difference between the dequeue time point and the enqueue time point of the buffer address of the third packet in the queue. The network device may include a latency class query table. As shown in Table 1, the latency class table includes a plurality of latency classes and a time difference corresponding to each latency class. If the time difference between the dequeue time point and enqueue time point of the buffer address of the third packet in the queue is 5 seconds, the latency class of the third packet is L1.

**Table 1:**

| Latency class table | | | | | | | |
|---|---|---|---|---|---|---|---|
| Time difference | 0 to 5 seconds | 6 to 20 seconds | 21 to 50 seconds | 51 to 120 seconds | 121 to 200 seconds | 201 to 400 seconds | More than 400 seconds |
| Latency class | L1 | L2 | L3 | L4 | L5 | L6 | L7 |

It may be understood that each latency class in the foregoing Table 1 corresponds to a different time length, and this is merely an example. In a specific setting, an equal time length may also be set. For example, if the time difference is 0 to 50 seconds, a corresponding latency class is L1. If the time difference is 51 to 100 seconds, a corresponding latency class is L2. If the time difference is 101 to 150 seconds, a corresponding latency class is L3.

For example, the network device may include a global time stamp module. The global time stamp module may generate a global time stamp. The network device adds a time stamp to a buffered packet based on the global time stamp generated by the global time stamp module. For example, a manner of determining the dequeue time point and the enqueue time point of the buffer address of the third packet in the queue may be as follows: Before the third packet is buffered in the on-chip buffer or the external buffer, the network device obtains a current first time stamp of the global time stamp module, and adds the first time stamp (for example, T1) to a packet header of the third packet. When the queue obtains a dequeue opportunity, after receiving a request for reading the third packet, the network device reads the third packet from the on-chip buffer or the external buffer based on the buffer address of the third packet, and obtains a current second time stamp (for example, T2) of the global time stamp module. T1 is the enqueue time point of the third packet, and T2 is the dequeue time point of the third packet.

When reading the third packet, the network device obtains the first time stamp in the packet header of the third packet, records T1 in a queue latency table of the queue, and records T2 in the queue latency table of the queue.

It may be understood that, after the third packet is read from the queue, the third packet leaves the buffer of the network device. Therefore, the second time stamp does not need to be added to the packet header of the third packet. When the third packet is read from the queue, the network device may read a current time point of the global time stamp module as the second time stamp, and the second time stamp is the dequeue time point of the third packet.

Step 203: The network device queries usage of the on-chip buffer, and determines a first latency threshold based on the usage.

The usage of the on-chip buffer indicates a size of an occupied storage space in the on-chip buffer. The network device stores a correspondence between the usage of the on-chip buffer and the first latency threshold.

For example, an occupation status table of the on-chip buffer is preset in the network device. As shown in Table 2, the occupation status table of the on-chip buffer includes the usage (which may be alternatively referred to as a waterline) of the on-chip buffer and a latency threshold corresponding to the usage. When determining that the usage of the on-chip buffer is 25%, the network device may determine that the first latency threshold is TH2.

**Table 2:**

| Occupation status table of the on-chip buffer | | | | | | |
|---|---|---|---|---|---|---|
| Usage of the on-chip buffer | 0% to 10% | 11% to 25% | 26% **to 45%** | 46% to 65% | 66% to 80% | 81% to 99% |
| Latency threshold | TH1 | TH2 | TH3 | TH4 | TH5 | TH6 |

It may be understood that, the usage of the on-chip buffer corresponding to each latency threshold is different. This is merely an example. During actual setting, same usage of the on-chip buffer may be set for each latency threshold. For example, if the usage of the on-chip buffer is 0% to 16.6%, a corresponding latency threshold is TH1. If the usage of the on-chip buffer is 16.7% to 33.3%, a corresponding latency threshold is TH2.

Step 204: Determine whether the queue latency is less than the first latency threshold.

Specifically, if the queue latency is less than the first latency threshold, step 205 is performed; or if the queue latency is greater than the first latency threshold, step 206 is performed.

The first packet is buffered in the on-chip buffer if the queue latency is less than the first latency threshold. To be specific, when a time length of the queue latency is less than a time length of the first latency threshold, the network device may determine that the first packet is a non-congested packet, and buffer the first packet in the on-chip buffer. In addition, as shown in Table 2, when the usage of the on-chip buffer is higher, the latency threshold is higher, and the time length corresponding to the latency threshold is shorter. Therefore, it can be determined that, when the usage of the on-chip buffer is low, the network device allows a packet with a long latency to be buffered in the on-chip buffer. When the usage of the on-chip buffer is high, the network device allows a packet with a short latency to be buffered in the on-chip buffer.

It may be understood that the queue latency is the packet latency of the third packet. Therefore, the queue latency may be the time difference between the dequeue time point and the enqueue time point of the buffer address of the third packet in the queue, or the latency class determined based on the time difference between the dequeue time point and the enqueue time point of the buffer address of the third packet in the queue. When the queue latency is compared with the first latency threshold, data corresponding to the queue latency and data corresponding to the first latency threshold are of a same type. For example, when the packet latency of the third packet is the time difference between the dequeue time point and the enqueue time point of the buffer address of the third packet in the queue, the latency threshold may be a time length. For another example, when the packet latency of the third packet is the latency class determined based on the time difference between the dequeue time point and the enqueue time point of the buffer address of the third packet in the queue, the latency threshold may be a latency class.

In the foregoing first case, when the packet latency of the third packet is the time difference between the dequeue time point and the enqueue time point of the buffer address of the third packet in the queue, the latency threshold may be a time length (for example, 400 seconds, 200 seconds, or 120 seconds). As shown in Table 3, a latency threshold in the occupation status table of the on-chip buffer corresponds to a specific latency time length. If the usage of the on-chip buffer is 1% to 10%, it indicates that the on-chip buffer has a large buffer space. In this case, a packet with a long latency is allowed to be buffered in the on-chip buffer, and TH1 may be 400 seconds. If the usage of the on-chip buffer is 66% to 80%, it indicates that the usage of the buffer space of the on-chip buffer is high. In this case, a packet with a short latency may be allowed to be buffered in the on-chip buffer, and TH5 may be 5 seconds.

**Table 3:**

| Occupation status table of the on-chip buffer | | | | | | |
|---|---|---|---|---|---|---|
| Usage of the on-chip buffer | 0% to 10% | 11% to 25% | 26% **to 45%** | 46% to 65% | 66% to 80% | 81% to 100% |
| Latency threshold | 400 seconds | 200 seconds | 120 seconds | 50 seconds | 5 seconds | 1 second |

Alternatively, when the packet latency of the third packet is the time difference between the dequeue time point and the enqueue time point of the buffer address of the third packet in the queue, the latency threshold may be a latency class. If the queue latency is the time difference between the dequeue time point and the enqueue time point of the third packet, the latency threshold may be a latency class. A maximum value of the time difference corresponding to the latency class in the first latency threshold may be obtained by querying Table 1, and the maximum value of the time difference is determined as the first latency threshold. For example, the first latency threshold is L5. When the queue latency is compared with the first latency threshold, Table 1 is queried to determine that the time difference corresponding to the first latency threshold is 200 seconds, and the queue latency is compared with 200 seconds.

In the foregoing second case, when the packet latency of the third packet is the latency class determined based on the time difference between the dequeue time point and the enqueue time point of the buffer address of the third packet in the queue, the latency threshold may be a latency class. As shown in Table 4, a latency threshold in the occupation status table of the on-chip buffer is a latency class. It may be understood that the latency class herein has a same meaning as the latency class in Table 1. If the usage of the on-chip buffer is 1% to 10%, it indicates that the on-chip buffer has a large buffer space. In this case, a packet with a long latency is allowed to be buffered in the on-chip buffer, and TH1 may be L7. To be specific, when the latency class of the packet received by the network device is L7, that is, the latency of the packet is greater than 400 seconds, and the usage of the on-chip buffer in the network device is less than or equal to 10%, the packet may be buffered in the on-chip buffer.

**Table 4:**

| Occupation status table of the on-chip buffer | | | | | | |
|---|---|---|---|---|---|---|
| Usage of the on-chip buffer | 0% to 10% | 11% to 25% | 26% **to 45%** | 46% to 65% | 66% to 80% | 81% to 100% |
| Latency threshold | L7 | L6 | L5 | L4 | L3 | L2 |

The queue latency is less than the first latency class, and it is determined that the buffer address of the first packet is in the on-chip buffer. If the queue latency is L5, the first latency threshold is L6, and the queue latency L5 is less than the first latency threshold L6, it is determined that the buffer address of the first packet is in the on-chip buffer.

Step 205: Buffer the first packet in the on-chip buffer.

For example, when determining to buffer the first packet in the on-chip buffer, the network device concatenates the packet to determine the buffer address of the first packet, and buffers the first packet in the on-chip buffer corresponding to the buffer address.

It should be noted that, a buffer area corresponding to a buffer address may store at least one packet, and concatenating the packet is determining the buffer address of the packet. For example, if a buffer size corresponding to a buffer address is 10 MB, and a size of the first packet is 5 MB, the first packet may be buffered in the buffer corresponding to the buffer address. The first packet is buffered to the buffer address, and the buffer address of the first packet is stored in the queue. For another example, a buffer size corresponding to a buffer address is 10 MB, another packet is buffered in the buffer address, and the another packet occupies a 2 MB buffer space in the buffer space. If the size of the first packet is 5 MB, the first packet can still be stored in the buffer space corresponding to the buffer address. The first packet is buffered, concatenated with the another packet, and stored, together with the another packet, in the buffer space corresponding to the buffer address.

It should be noted that a process in which the network device buffers the first packet further includes: determining an enqueue time point of the first packet. For example, the buffer address of the first packet is added to the queue, and the network device adds a first time stamp to the first packet based on the enqueue time point of the first packet. After receiving a request for reading the first packet, the network device reads the buffer address of the first packet from the queue, that is, the network device deletes the buffer address of the first packet from the queue. When reading the first packet based on the buffer address, the network device obtains the first time stamp in the first packet, records the first time stamp in the queue latency table of the queue, and records a second time stamp. The second time stamp is a time point at which the buffer address of the first packet is read from the queue. The time is a global time of the network device, and the global time is the second time stamp recorded by the network device in the queue latency table of the queue.

Step 206: Buffer the first packet in the external buffer.

It may be understood that the packet needs to be concatenated before buffering the first packet in the external buffer, to determine the buffer address of the first packet, and to buffer the first packet in the external buffer corresponding to the buffer address.

A manner of concatenating the packet is the same as the foregoing concatenating manner, and details are not described herein again.

For example, if the temporary buffer is configured in the network device, after obtaining the first packet, the network device buffers the first packet in the temporary buffer. After the buffer address of the first packet is determined, the first packet is read from the temporary buffer, and the first packet is buffered in a buffer area corresponding to the buffer address. If no temporary buffer is configured in the network device, after obtaining the first packet, the network device determines the buffer address of the first packet, and buffers the first packet in the buffer area corresponding to the buffer address.

It should be noted that the external buffer features a large capacity but a limited bandwidth. If a write bandwidth of the external buffer is insufficient, the packet cannot be written into the external buffer. When the first packet is buffered in the external buffer, if the external buffer has backpressure information, and the backpressure information indicates that the write bandwidth of the external buffer is insufficient, the packet cannot be written into the external buffer. Therefore, when it is determined that the buffer address of the first packet is in the external buffer, the backpressure information of the external buffer may be obtained to determine whether the first packet is discarded or not.

For example, the network device obtains the backpressure information of the external buffer. If the backpressure information is a first value, for example, the first value of the backpressure information is 0, it indicates that the bandwidth of the external buffer is sufficient to buffer the first packet, and the network device buffers the first packet in the external buffer. If the backpressure information is a second value, for example, the second value of the backpressure information is 1, it indicates that the bandwidth of the external buffer is insufficient to buffer the first packet, and the network device discards the first packet. The bandwidth of the external buffer indicates a data amount stored by the external buffer per unit time period.

It should be noted that, when receiving each packet, the network device needs to determine a buffer address of the packet. When the network device receives two consecutive packets in a queue, buffer addresses of a previous packet and a next packet included in the queue may correspond to different buffer areas, buffer addresses may be in different buffers. For example, if the buffer address of the previous packet is a buffer address in the external buffer, a buffer area of the previous packet is the external buffer. If the buffer address of the next packet is a buffer address in the on-chip buffer, a buffer area of the next packet is in the on-chip buffer.

For example, the network device may set the first latency threshold based on a buffer area of a packet before the first packet. In this way, packets in the same queue can be buffered in a same buffer area. For example, after determining the queue latency, if the network device determines that the second packet is buffered in the on-chip buffer, the network device performs step 204 to step 206. If it is determined that the second packet is buffered in the external buffer, it is determined whether the queue latency is less than a second latency threshold. If the queue latency is less than the second latency threshold, the first packet is buffered in the on-chip buffer. If the queue latency is not less than the second latency threshold, the first packet is buffered in the external buffer.

The second packet is a packet before the first packet in the queue, that is, a buffer address of the second packet is a previous element enqueued in the queue in which the buffer address of the first packet is enqueued. The second latency threshold is less than the first latency threshold, and a difference between the second latency threshold and the first latency threshold is a preset value. For example, if the first latency threshold is L6, and the difference between the second latency threshold and the first latency threshold is 1, the second latency threshold may be L5. For another example, if the first latency threshold is 200 seconds, and the difference between the second latency threshold and the first latency threshold is 60 seconds, the second latency threshold is 140 seconds.

The queue latency of L5, the first latency threshold of L6, and the second latency threshold of L5 are used as an example. If the second packet is buffered in the on-chip buffer, and it is determined that the queue latency L5 is less than the first latency threshold L6, the first packet is buffered in the on-chip buffer. If the second packet is buffered in the external buffer, the second latency threshold is L5, and it is determined that the queue latency L5 is equal to the second latency threshold L5, the first packet is buffered in the external buffer.

It may be understood that, if the second packet is buffered in the external buffer, and the buffer address of the first packet is in the external buffer, buffer addresses of consecutive packets (the second packet and the first packet) in a same queue are in the same buffer. When packets in the queue have dequeue opportunities, the network device can read the consecutive packets in the queue from the external buffer. The addresses from which the packets are read are remained in the same buffer.

In this embodiment of this application, a manner of determining the buffer address of the first packet by using the queue latency threshold and the first latency threshold may be referred to as a local buffer management scheme (LBMS). The LBMS is used to determine the first latency threshold based on the usage of the on-chip buffer, determine the buffer address of the first packet by comparing the latency of the queue in which the packet is enqueued with the first latency threshold, and allocate the buffer in the network device. This can ensure that a packet with a short queue latency is buffered in the on-chip buffer, reduce a risk that the on-chip buffer is fully occupied by congested packets, properly utilize the on-chip buffer, and improve utilization of the on-chip buffer.

It should be noted that, in the foregoing embodiment, the first latency threshold is determined based on an occupancy status of the on-chip buffer, and the buffer address of the packet is allocated based on the first latency threshold. During actual application, a congestion status of a packet may be further determined based on a port that receives the packet or a priority of the packet, to allocate a buffer address to the packet.

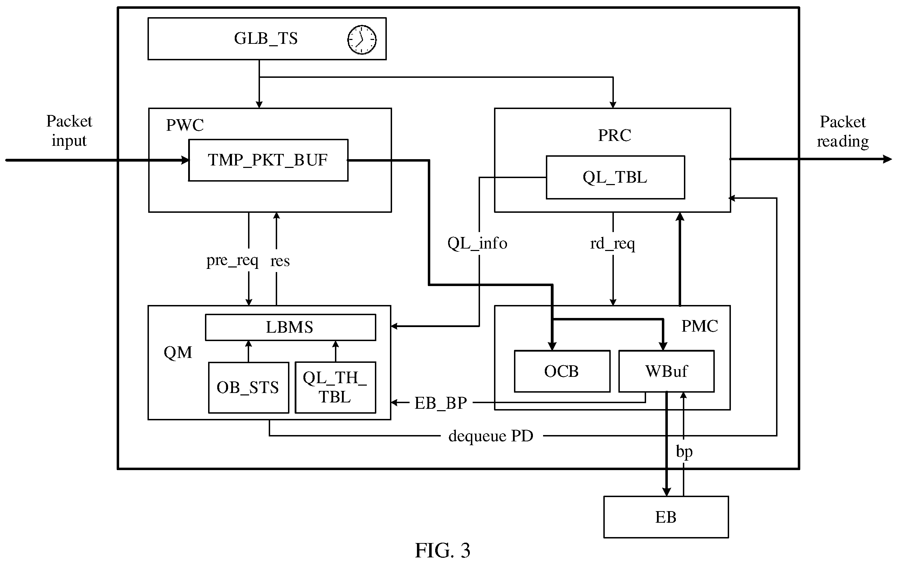

FIG. 3 is a schematic diagram of a structure of an integrated circuit system according to an embodiment of this application. The method in embodiments of this application may be applied to a network device including the modular structure shown in FIG. 3.

The network device may include a packet write control (PWC) module, a queue manager (QM), a packet memory control (PMC) module, a packet read control (PRC) module, and a global time stamp (GLB_TS) module. The PMC includes an on-chip buffer (or a first storage medium).

The PWC is configured to receive a first packet, and obtain a queue number of a packet header of the first packet. The PWC sends an enqueue request (for example, pre_req in FIG. 3) of the first packet to the QM, where the enqueue request pre_req includes the queue number of the first packet.

For example, the PWC may further include a temporary buffer (TMP_PKT_BUF). When the PWC receives the first packet, before a storage device determines a buffer address of the first packet, the PWC may temporarily buffer the first packet in TMP_PKT_BUF.

The QM is configured to: receive the enqueue request from the PWC, and query a queue latency of the queue based on the queue number of the queue in the enqueue request. The QM may further query usage of the on-chip buffer, and determine a first latency threshold based on the usage.

The queue latency is a packet latency of a third packet. The third packet is a latest packet dequeued from the queue, that is, the third packet is a previous packet dequeued from the queue. The packet latency is determined based on a time difference between a dequeue time point and an enqueue time point of a buffer address of the third packet in the queue.

It may be understood that an LBMS in the QM is referred to as a local buffer management scheme (LBMS), and the QM may implement, by using the LBMS (namely, a scheme), related steps in the method provided in embodiments of this application.

It should be noted that the QM determines the queue latency of the queue based on the packet latency of the third packet that is the latest packet dequeued from the queue. The QM may obtain the packet latency of the third packet from the PRC.

It may be understood that the QM is configured to maintain an occupation status of the on-chip buffer. The QM has a correspondence table between the occupation status of the on-chip buffer and the first latency threshold. For example, the QM may query the usage of the on-chip buffer (for example, On-chip buffer status, OB_STS) and a latency threshold (for example, queue latency threshold table, QL_TH_TBL) corresponding to the usage.

The QM queries the queue latency and the first latency threshold of the queue. If it is determined that the queue latency is less than the first latency threshold, the QM determines that the buffer address of the first packet is in the on-chip buffer, and sends first indication information (for example, res) to the PWC, to indicate the PWC to request the PMC to buffer the first packet in the on-chip buffer. If it is determined that the queue latency is greater than the first latency threshold, the QM determines that the buffer address of the first packet is in the external buffer, and sends second indication information to the PWC, to indicate the PWC to request the PMC to buffer the first packet in the external buffer.

It should be noted that a write buffer (WBuf) is configured in the PMC, and a depth of the WBuf indicates buffer pressure of the external buffer. The PMC may feed back the buffer pressure of the external buffer to the QM in real time, for example, backpressure information (EB_BP) in FIG. 3. After the QM determines that the buffer address of the first packet is in the external buffer, the QM sends third indication information to the PWC, to indicate the PWC to discard the first packet.

In a first case, the PWC receives the first indication information from the QM. The PWC reads the first packet from the temporary buffer (TMP_PKT_BUF), sends the first packet to the PMC, and indicates the PMC to buffer the first packet in the on-chip buffer. The PMC is configured to receive the first packet from the PMC, and buffer the first packet in the on-chip buffer based on the indication information of the PMC.

In a second case, the PWC receives the second indication information from the QM. The PWC reads the first packet from the temporary buffer (TMP_PKT_BUF), sends the first packet to the PMC, and indicates the PMC to buffer the first packet in the external buffer. The PMC is configured to receive the first packet from the PMC, and buffer the first packet in the external buffer based on the indication information of the PMC.

In a third case, the PWC receives the third indication information from the QM. The PWC reads the first packet from the temporary buffer (TMP_PKT_BUF), and deletes the first packet.

It should be noted that the QM may obtain the packet latency of the third packet from the PRC. The packet latency of the third packet is determined based on the dequeue time point and the enqueue time point of the third packet. The PRC may include a queue latency table of the queue.

The PRC is configured to read a packet and maintain the queue latency table of the queue. For example, the packet latency of the third packet is determined, and a first time stamp of a packet header of the third packet is the enqueue time point of the third packet. When the third packet is read, the PRC reads the first time stamp of the packet header of the third packet, and determines the enqueue time point of the third packet. In addition, the PRC obtains a current global time stamp as the dequeue time point of the third packet. The QM obtains the dequeue time point and enqueue time point of the third packet in the PRC, and determines the packet latency of the third packet, namely, the queue latency of the queue.

The PWC is further configured to: when the PWC reads the first packet from the temporary buffer (TMP_PKT_BUF) and sends the first packet to the PMC, obtain the first time stamp from GLB_TS, and add the first time stamp to the packet header of the first packet.

It may be understood that the global time stamp (GLB_TS) module is configured to generate a global time stamp, and send the generated global time stamp to the PWC or the PRC, so that the PRC may record a dequeue time point of a packet based on the global time stamp, and maintain a queue latency table of a queue.

When a packet is read, a specific process is as follows: Queues in the QM are scheduled, and a queue obtains a dequeue opportunity. A PD (which may be an LPD or an EPD) in a header of the queue is read from the queue and sent to the PRC through an interface of a dequeue PD. After receiving a request for reading the queue, the PRC decomposes the request for reading the queue into a request for reading the packet and sends the request for reading the packet to the PMC through an rd_req interface. When the PMC receives the request for reading the packet in the queue from the PRC, if the packet is buffered in the on-chip buffer, the PMC directly reads the packet from the OCB and sends the packet to the PRC. If the packet is not buffered in the on-chip buffer, the PMC reads the packet from the EB and sends the packet to the PRC. After receiving the packet returned by the PMC, the PRC unpacks the packet to obtain an original independent packet and sends the original independent packet out of a storage module.

For example, a process of calculating a packet latency of a packet is as follows: Before reading the packet from TMP_PKT_BUF and writing the packet into the PMC, the PWC adds a time stamp to a header of the packet. The time stamp comes from GLB_TS, and is referred to as HEAD_TS. When the PMC reads the packet from the OCB or the EB and returns the packet to the PRC, the PRC obtains a current global time stamp free _TS from GLB_TS. The PRC obtains a latency QL of the current packet based on HEAD_TS and free _TS of the header of the packet that are obtained by reading the packet. The PRC uses a queue number of the current packet as an index to address QL_TBL in the QM, and writes the QL of the current packet into the queue latency table of the queue in which the packet is enqueued as a latest latency of the queue.

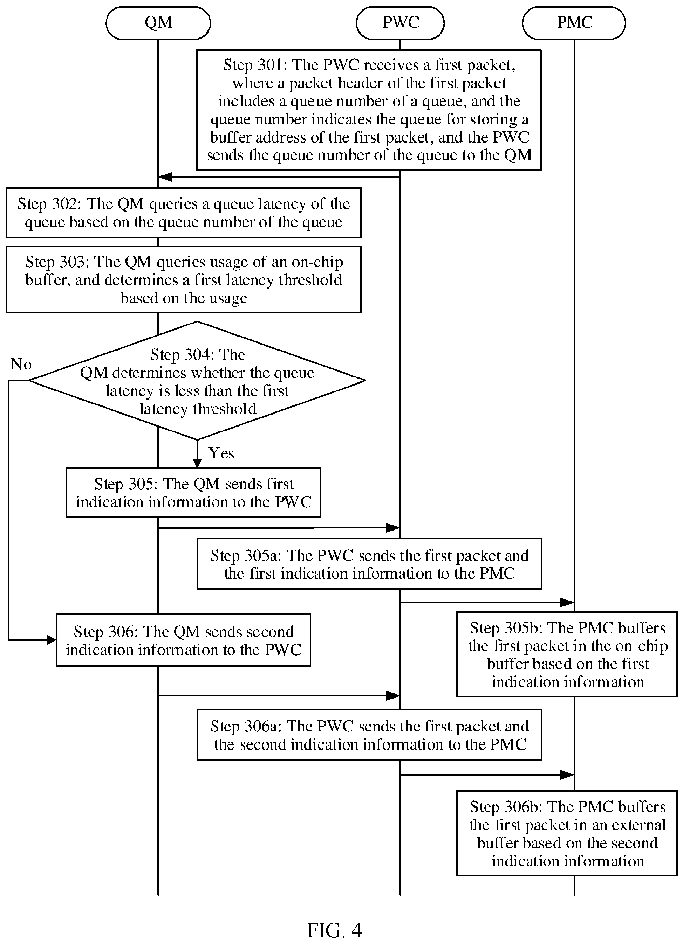

The packet buffering method provided in embodiments of this application may be applied to the integrated circuit system in the foregoing embodiment. A specific procedure of the method is shown in FIG. 4, and includes step 301 to step 306.

In this embodiment of this application, modularization of an integrated circuit system is used as an application scenario, and a storage device includes a PWC, a QM, and a PMC. The PMC includes an on-chip buffer (or a first storage medium), and the storage device further includes an external buffer (or a second storage medium).

It should be noted that step 301 to step 306 in this embodiment of this application respectively correspond to step 201 to step 206 in the foregoing embodiment. Therefore, related technical details or implementations in step 201 to step 206 may also be applied to step 301 to step 306, and details are not described herein again. Similarly, related technical details or implementations in embodiments of this application may also be applied to the foregoing embodiment.

Step 301: The PWC receives a first packet, where a packet header of the first packet includes a queue number of a queue, and the queue number indicates the queue for storing a buffer address of the first packet, and the PWC sends the queue number of the queue to the QM.

For example, the PWC receives the first packet, and identifies the queue number of the queue in the packet header of the first packet. The PWC may send an enqueue request to the QM, and the enqueue request includes the queue number of the queue.

It may be understood that the PWC sends, to the QM, the queue number of the queue in which the first packet is enqueued, and the PWC may temporarily buffer the first packet, and then buffer the first packet after a buffer address of the first packet is determined.

Step 302: The QM queries a queue latency of the queue based on the queue number of the queue.

The queue latency is a packet latency of a third packet. The third packet is a latest packet dequeued from the queue, and the packet latency is determined based on a time difference between a dequeue time point and an enqueue time point of a buffer address of the third packet in the queue.

For example, a queue latency table (QL_TBL) of each queue may be preset in the QM. When the QM receives a queue number of a queue, or the QM receives an enqueue request from the PWC, and determines a queue number of a queue from the enqueue request. The QM may query a queue latency table of the queue based on the queue number of the queue, to determine a queue latency of the queue.

For another example, the storage device may further include a packet read control (PRC) module. The PRC stores the queue latency table of the queue, and the queue latency table of the queue stores enqueue time points and dequeue time points of packets corresponding to the queue. After receiving the queue number of the queue, the QM may query the queue latency of the queue from the queue latency table of the queue stored in the PRC based on the queue number of the queue.

It should be noted that the queue latency table of the queue includes the dequeue time point and the enqueue time point of the buffer address of the third packet in the queue, so that the storage device may determine the packet latency based on the time difference between the dequeue time point and the enqueue time point of the buffer address of the third packet in the queue.

A global time stamp (GLB_TS) module generates a global time stamp, and sends the generated global time stamp to the PWC or the PRC, so that the PRC may record a dequeue time point of a packet based on the global time stamp, and maintain a queue latency table of a queue.

For example, before requesting the PMC to buffer the third packet in the on-chip buffer or the external buffer, the PWC receives a first time stamp sent by GLB_TS, and adds the first time stamp to the packet header of the third packet. The QM adds the buffer address of the third packet to the queue and indicates the first time stamp to the PRC. The PRC records the first time stamp in the queue latency table of the queue. The first time stamp is the enqueue time point of the buffer address of the third packet in the queue. After receiving a request for reading the third packet, the PRC reads the third packet from the first storage medium or the second storage medium. The PRC receives a second time stamp sent by GLB_TS. The second time stamp is the dequeue time point of the buffer address of the third packet in the queue. The PRC records the second time stamp in the queue latency table of the queue.

For another example, before requesting the PMC to buffer the third packet in the on-chip buffer or the external buffer, the PWC receives a first time stamp sent by GLB_TS, and adds the first time stamp to the third packet. When the third packet is read from the queue, the PRC reads the first time stamp in the third packet and receives a second time stamp from GLB_TS when reading the third packet. The second time stamp is the dequeue time point of the buffer address of the third packet in the queue. The PRC records the first time stamp and the second time stamp in the queue latency table of the queue.

It may be understood that in this embodiment of this application, the queue latency is determined based on the packet latency of the third packet. The storage device determines the packet latency of the third packet based on the dequeue time point and the enqueue time point of the third packet. The foregoing method for determining the packet latency of the third packet is the same as a method for determining a packet latency of the first packet, and details are not described herein again.

Step 303: The QM queries usage of the on-chip buffer, and determines a first latency threshold based on the usage.

The usage indicates a size of an occupied storage space in the on-chip buffer. The storage device stores a correspondence between the usage and the first latency threshold.

It may be understood that the QM is configured to maintain an occupation status of the on-chip buffer. The occupation status table of the on-chip buffer is preset in the on-chip buffer, and includes the usage of the on-chip buffer (for example, on-chip buffer status, OB_STS) and a latency threshold (for example, queue latency threshold table, QL_TH_TBL) corresponding to the usage. When the storage device determines the first latency threshold, the QM queries the occupation status table of the on-chip buffer, and determines the first latency threshold.

Step 304: The QM determines whether the queue latency is less than the first latency threshold.

Specifically, the QM compares the queue latency with the first latency threshold. If the QM determines that the queue latency is less than the first latency threshold, step 305 to step 305b are performed. If the QM determines that the queue latency is greater than the first latency threshold, step 306 to step 306b are performed.

It may be understood that, before performing step 304, the QM may set the first latency threshold for the buffer address of the third packet in the queue. A buffer address of a second packet is a buffer address of a previous packet enqueued in the queue in which the buffer address of the first packet is enqueued. For example, if the storage device determines that the buffer address of the third packet is in the on-chip buffer, step 304 is performed, and step 305 to step 305b or step 306 to step 306b are performed based on a result of performing step 304. If the storage device determines that the buffer address of the second packet is in the external buffer, and the QM determines that the queue latency is less than a second latency threshold, the QM indicates the PWC to request the PMC to buffer the first packet in the on-chip buffer; or if the QM determines that the queue latency is greater than the second latency threshold, the QM indicates the PWC to request the PMC to buffer the first packet in the external buffer. The second latency threshold is less than the first latency threshold, and a difference between the second latency threshold and the first latency threshold is a preset value.

Step 305: The QM sends first indication information to the PWC.

If the buffer address of the first packet is in the on-chip buffer, the first indication information indicates that the buffer address of the first packet is in the on-chip buffer.

Step 305a: The PWC sends the first packet and the first indication information to the PMC.

It may be understood that, after it is determined that the first packet is buffered in the on-chip buffer, the first packet needs to be concatenated, to determine the buffer address of the first packet. A method for concatenating the first packet has been described in step 205 in the foregoing embodiment, and details are not described herein again.

The enqueue request sent by the PWC to the QM further includes a packet length of the first packet, so that the QM may concatenate the first packet based on the packet length of the first packet, to determine the buffer address of the first packet.

Step 305b: The PMC buffers the first packet in the on-chip buffer based on the first indication information.

The PMC buffers the first packet in the on-chip buffer based on the buffer address in the first indication information.

It may be understood that a difference between step 305 to step 305b and step 306 to step 306b lies in that indication information of the QM is different. For a specific implementation, refer to the foregoing steps. Details are not described herein again.

Step 306: The QM sends second indication information to the PWC.

If the buffer address of the first packet is in the external buffer, the second indication information indicates that the buffer address of the first packet is in the external buffer.

Step 306a: The PWC sends the first packet and the second indication information to the PMC.

The specific implementation of step 305a is the same as that of step 306a, and a difference lies in that the first indication information or the second indication information is carried. For a specific implementation of this step, refer to step 305a. Details are not described herein again.

Step 306b: The PMC buffers the first packet in the external buffer based on the second indication information.

It may be understood that the external buffer features a large capacity but a limited bandwidth. When bandwidth pressure of the external buffer is high, the packet cannot be written into the external buffer. Therefore, before concatenating the first packet, backpressure information of the external buffer needs to be determined. For example, if the backpressure information of the external buffer is 0, it indicates that the bandwidth of the external buffer is sufficient to buffer the first packet, the first packet is concatenated, and the buffer address of the packet is determined. The second indication information includes the buffer address, and indicates the PWC to request the PMC to buffer the first packet in the external buffer corresponding to the buffer address. If the backpressure information of the external buffer is 1, it indicates that the bandwidth of the external buffer is insufficient to buffer the first packet, and the QM determines to discard the first packet. In this case, the first packet does not need to be concatenated.

For example, because the PMC is connected to the external buffer, the PMC may obtain the backpressure information of the external buffer in real time, and send the backpressure information of the external buffer to the QM, so that the QM determines the buffer address of the packet based on the backpressure information.

It should be noted that the QM may implement related steps in the method provided in this embodiment of this application by using an LBMS (namely, a scheme). This can ensure that a packet with a short queue latency is buffered in the on-chip buffer, reduce a risk that the on-chip buffer is fully occupied by congested packets, properly utilize the on-chip buffer, and improve utilization of the on-chip buffer.

It should be noted that the PRC includes a write buffer (WBuf), and a depth of the WBuf indicates buffer pressure of the external buffer. When the buffer pressure of the external buffer increases, the depth of the WBuf increases. If the bandwidth of the external buffer is insufficient to buffer the packet and the depth of the WBuf exceeds a preset threshold, it indicates that the bandwidth of the external buffer is insufficient to buffer the packet. The WBuf may generate the backpressure information. If the depth of the WBuf exceeds the preset threshold, the generated backpressure information is a first value. If the depth of the WBuf does not exceed the preset threshold, the generated backpressure information is a second value.

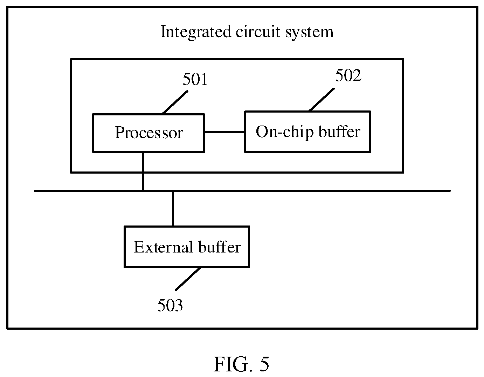

An embodiment of this application further provides an integrated circuit system. As shown in FIG. 5, the integrated circuit system includes a processor 501, an on-chip buffer 502, and an external buffer 503. The on-chip buffer 502 is inside a chip of the processor 501, and the external buffer 503 is outside the chip of the processor 501. The processor 501 and the external buffer 503 may be interconnected by using a line. The processor is configured to receive a first packet, and identify a queue number of the first packet, where the queue number indicates a queue for storing a buffer address of the first packet; query a queue latency of the queue based on the queue number; query usage of a first storage medium, and determine a first latency threshold based on the usage; and buffer the first packet in the first storage medium if the queue latency is less than the first latency threshold, or buffer the first packet in a second storage medium if the queue latency is greater than the first latency threshold.

It may be understood that the processor 501 in the integrated circuit system may be configured to implement the implementation steps in the foregoing packet buffering method. To avoid repetition, details are not described herein again.

An embodiment of this application further provides a computer storage medium. The computer storage medium includes computer instructions. When the computer instructions are run on the foregoing network device, the network device is enabled to perform functions or steps performed in the foregoing method embodiments.

An embodiment of this application further provides a computer program product. When the computer program product runs on a computer, the computer is enabled to perform functions or steps performed in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an internal structure of an apparatus is divided into different functional modules to implement all or some of the functions described above.

In the several embodiments provided in this application, it should be understood that the disclosed system and method may be implemented in other manners. For example, the described apparatus embodiments are merely examples. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate components may or may not be physically separate, and components displayed as units may be one or more physical units. To be specific, the units may be located in one place, or may be distributed on a plurality of different places. Some or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor to perform all or some of the steps of the method in embodiments of this application. The foregoing storage medium includes any medium that can store program code, such as a USB flash drive, a removable hard disk, a read-only memory (ROM), a random access memory (RAM), a magnetic disk, or an optical disc.

The protection scope of this application shall be subject to the protection scope of the claims.

## Claims

1. A packet buffering method, applied to a network device (100), wherein the network device (100) comprises a first storage medium and a second storage medium, the first storage medium is inside a chip of a processor **(110)** of the network device (100), the second storage medium is outside the chip of the processor (110), and the method comprises:
receiving (201) a first packet, and identifying a queue number of the first packet, wherein the queue number indicates a queue for storing a buffer address of the first packet;
querying (202) a queue latency of the queue based on the queue number, wherein the queue latency indicates a congestion status of the queue;
querying (203) a usage of the first storage medium, and determining (204) a first latency threshold based on the usage; and
buffering (205) the first packet in the first storage medium if the queue latency is less than the first latency threshold, or buffering (206) the first packet in the second storage medium if the queue latency is greater than the first latency threshold,
wherein before the buffering the first packet in the first storage medium if the queue latency is less than the first latency threshold, or buffering the first packet in the second storage medium if the queue latency is greater than the first latency threshold, the method further comprises:
determining that a second packet is buffered in the first storage medium, wherein
a packet header of the second packet comprises the queue number of the queue, and a buffer address of the second packet is a previous element enqueued in the queue in which the buffer address of the first packet is enqueued,
wherein the method further comprises:
determining that the second packet is buffered in the second storage medium; and
buffering the first packet in the first storage medium if the queue latency is less than a second latency threshold, or buffering the first packet in the second storage medium if the queue latency is greater than the second latency threshold, wherein
the second latency threshold is less than the first latency threshold, and a difference between the second latency threshold and the first latency threshold is a preset value.

2. The method according to claim **1,** wherein the queue latency of the queue is a packet latency of a third packet; and
the third packet is a previous packet dequeued from the queue, and the packet latency is determined based on a time difference between a dequeue time point and an enqueue time point of a buffer address of the third packet in the queue.

3. The method according to claim 2, wherein the network device (100) comprises a queue latency table of the queue, the queue latency table comprises an enqueue time point and a dequeue time point of a previous packet dequeued from the queue, and the method further comprises:
adding a first time stamp into the third packet before buffering the third packet in the first storage medium or the second storage medium, wherein the first time stamp is the enqueue time point of the buffer address of the third packet;
adding the buffer address of the third packet to the queue; and
after receiving a request for reading the third packet, reading the third packet from the first storage medium or the second storage medium based on the buffer address, identifying the first time stamp in the third packet, determining a second time stamp, and recording the first time stamp and the second time stamp in the queue latency table, wherein the second time stamp is the dequeue time point of the buffer address of the third packet, and a global time of the network device (100).

4. The method according to claim 2 or 3, wherein the packet latency is the time difference between the dequeue time point and the enqueue time point of the buffer address of the third packet in the queue; or
the packet latency is a latency class determined based on the time difference between the dequeue time point and the enqueue time point of the buffer address of the third packet in the queue, and the network device (100) stores a plurality of latency classes and a time difference corresponding to each latency class.

5. The method according to any one of claims 1 to 4, wherein the network device (100) comprises an occupation status table of the first storage medium, and the occupation status table of the first storage medium comprises an occupied storage space of the first storage medium and a latency threshold corresponding to the occupied storage space; and
the querying usage of the first storage medium, and determining a first latency threshold based on the usage comprises:
querying the usage of the first storage medium, and determining the occupied storage space corresponding to the usage; and
determining that the latency threshold corresponding to the occupied storage space is the first latency threshold.

6. An integrated circuit system, comprising a packet write control, PWC, module, a queue manager, QM, and a packet memory control, PMC, module, wherein the PMC module comprises a first storage medium, and the PMC module is connected to a second storage medium;
the PWC module is configured to receive a first packet, and identify a queue number of the first packet, wherein the queue number indicates a queue for storing a buffer address of the first packet; and
the QM is configured to: query a queue latency of the queue based on the queue number, wherein the queue latency indicates a congestion status of the queue, query usage of the first storage medium, determine a first latency threshold based on the usage, and if the QM determines that the queue latency is less than the first latency threshold, send first indication information to the PWC module, to indicate the PWC module to request the PMC module to buffer the first packet in the first storage medium, or if the QM determines that the queue latency is greater than the first latency threshold, send second indication information to the PWC module, to indicate the PWC module to request the PMC module to buffer the first packet in the second storage medium,
wherein
the QM is further configured to: before sending the first indication information or the second indication information to the PWC module, determine that a second packet is buffered in the first storage medium; and
a packet header of the second packet comprises the queue number of the queue, and a buffer address of the second packet is a previous element enqueued in the queue in which the buffer address of the first packet is enqueued,
wherein
the QM is further configured to determine that the second packet is buffered in the second storage medium;
if the QM determines that the queue latency is less than a second latency threshold, the QM sends the first indication information to the PWC module, to indicate the PWC module to request the PMC module to buffer the first packet in the first storage medium; or
if the QM determines that the queue latency is greater than the second latency threshold, the QM sends the second indication information to the PWC module, to indicate the PWC module to request the PMC module to buffer the first packet in the second storage medium; and
the second latency threshold is less than the first latency threshold, and a difference between the second latency threshold and the first latency threshold is a preset value.

7. The integrated circuit system according to a claim 6, wherein the queue latency of the queue is a packet latency of a third packet; and
the third packet is a previous packet dequeued from the queue, and the packet latency is determined based on a time difference between a dequeue time point and an enqueue time point of a buffer address of the third packet in the queue.

8. The integrated circuit system according to claim 7, wherein the integrated circuit system further comprises a packet read control, PRC, module, the PRC module stores a queue latency table of the queue, the queue latency table of the queue stores an enqueue time point and a dequeue time point of a packet corresponding to the queue, and the QM stores the queue;
the PWC module is further configured to add a first time stamp to the third packet before requesting the PMC module to buffer the third packet in the first storage medium or the second storage medium, wherein the first time stamp is the enqueue time point of the third packet;
the QM is further configured to: add the buffer address of the third packet to the queue, and if the QM receives a request for reading the third packet, send the request for reading the third packet and the buffer address of the third packet to the PRC module; and
the PRC module is configured to: after receiving the request for reading the third packet from the QM, read the third packet from the first storage medium or the second storage medium based on the buffer address of the third packet, determine the first time stamp in the third packet, determine a second time stamp, and record the first time stamp and the second time stamp in the queue latency table, wherein the second time stamp is a global time of a network device (100), and the dequeue time point of the buffer address of the third packet in the queue.

9. The integrated circuit system according to claim 7 or 8, wherein the packet latency is the time difference between the dequeue time point and the enqueue time point of the buffer address of the third packet in the queue; or
the packet latency is a latency class determined based on the time difference between the dequeue time point and the enqueue time point of the buffer address of the third packet in the queue, and the network device (100) stores a plurality of latency classes and a time difference corresponding to each latency class.

10. The integrated circuit system according to any one of claims 7 to 9, wherein the integrated circuit system stores an occupation status table of the first storage medium, and the occupation status table of the first storage medium comprises an occupied storage space of the first storage medium and a latency threshold corresponding to the occupied storage space; and
when the QM is configured to query the usage of the first storage medium, and determine the first latency threshold based on the usage, the QM is specifically configured to: query the usage of the first storage medium, determine the occupied storage space corresponding to the usage, and determine that the latency threshold corresponding to the occupied storage space is the first latency threshold.

11. A computer-readable storage medium, comprising computer instructions, which when executed by a network device (100), cause said network device (100) to perform all the steps of a method according to any one of claims 1 to 5.

## Patentansprüche

1. Paketpufferverfahren, das auf eine Netzwerkvorrichtung (100) angewendet wird, wobei die Netzwerkvorrichtung (100) ein erstes Speichermedium und ein zweites Speichermedium umfasst, das erste Speichermedium im Inneren eines Chips eines Prozessors (110) der Netzwerkvorrichtung (100) liegt, das zweite Speichermedium außerhalb des Chips des Prozessors (110) liegt und das Verfahren Folgendes umfasst:
Empfangen (201) eines ersten Pakets und Identifizieren einer Warteschlangennummer des ersten Pakets, wobei die Warteschlangennummer eine Warteschlange zum Speichern einer Pufferadresse des ersten Pakets angibt;
Abfragen (202) einer Warteschlangenlatenz der Warteschlange basierend auf der Warteschlangennummer, wobei die Warteschlangenlatenz einen Überlastungsstatus der Warteschlange angibt;
Abfragen (203) einer Nutzung des ersten Speichermediums und Bestimmen (204) eines ersten Latenzschwellenwerts basierend auf der Nutzung; und
Puffern (205) des ersten Pakets in dem ersten Speichermedium, wenn die Warteschlangenlatenz kleiner als der erste Latenzschwellenwert ist, oder Puffern (206) des ersten Pakets in dem zweiten Speichermedium, wenn die Warteschlangenlatenz größer als der erste Latenzschwellenwert ist,
wobei das Verfahren vor dem Puffern des ersten Pakets in dem ersten Speichermedium, wenn die Warteschlangenlatenz kleiner als der erste Latenzschwellenwert ist, oder dem Puffern des ersten Pakets in dem zweiten Speichermedium, wenn die Warteschlangenlatenz größer als der erste Latenzschwellenwert ist, ferner Folgendes umfasst:
Bestimmen, dass ein zweites Paket in dem ersten Speichermedium gepuffert ist, wobei
ein Paketkopf des zweiten Pakets die Warteschlangennummer der Warteschlange umfasst und eine Pufferadresse des zweiten Pakets ein vorheriges Element ist, das in der Warteschlange eingereiht ist, in welcher die Pufferadresse des ersten Pakets eingereiht ist,
wobei das Verfahren ferner Folgendes umfasst:
Bestimmen, dass das zweite Paket in dem zweiten Speichermedium gepuffert ist; und
Puffern des ersten Pakets in dem ersten Speichermedium, wenn die Warteschlangenlatenz kleiner als ein zweiter Latenzschwellenwert ist, oder Puffern des ersten Pakets in dem zweiten Speichermedium, wenn die Warteschlangenlatenz größer als der zweite Latenzschwellenwert ist, wobei
der zweite Latenzschwellenwert kleiner als der erste Latenzschwellenwert ist und eine Differenz zwischen dem zweiten Latenzschwellenwert und dem ersten Latenzschwellenwert ein voreingestellter Wert ist.

2. Verfahren nach Anspruch 1, wobei die Warteschlangenlatenz der Warteschlange eine Paketlatenz eines dritten Pakets ist; und
das dritte Paket ein vorheriges Paket ist, das aus der Warteschlange ausgereiht wurde, und die Paketlatenz basierend auf einer Zeitdifferenz zwischen einem Ausreihungszeitpunkt und einem Einreihungszeitpunkt einer Pufferadresse des dritten Pakets in der Warteschlange bestimmt wird.

3. Verfahren nach Anspruch 2, wobei die Netzwerkvorrichtung (100) eine Warteschlangenlatenztabelle der Warteschlange umfasst, die Warteschlangenlatenztabelle einen Einreihungszeitpunkt und einen Ausreihungszeitpunkt eines vorherigen aus der Warteschlange ausgereihten Pakets umfasst und das Verfahren ferner Folgendes umfasst:
Hinzufügen eines ersten Zeitstempels zu dem dritten Paket vor dem Puffern des dritten Pakets in dem ersten Speichermedium oder in dem zweiten Speichermedium, wobei der erste Zeitstempel der Einreihungszeitpunkt der Pufferadresse des dritten Pakets ist;
Hinzufügen der Pufferadresse des dritten Pakets zu der Warteschlange; und
nach dem Empfangen einer Abfrage zum Lesen des dritten Pakets, Lesen des dritten Pakets von dem ersten Speichermedium oder von dem zweiten Speichermedium basierend auf der Pufferadresse, Identifizieren des ersten Zeitstempels in dem dritten Paket, Bestimmen eines zweiten Zeitstempels und Aufzeichnen des ersten Zeitstempels und des zweiten Zeitstempels in der Warteschlangenlatenztabelle, wobei der zweite Zeitstempel der Ausreihungszeitpunkt der Pufferadresse des dritten Pakets und eine globale Zeit der Netzwerkvorrichtung (100) ist.

4. Verfahren nach Anspruch 2 oder 3, wobei die Paketlatenz die Zeitdifferenz zwischen dem Ausreihungszeitpunkt und dem Einreihungszeitpunkt der Pufferadresse des dritten Pakets in der Warteschlange ist; oder
die Paketlatenz eine Latenzklasse ist, die basierend auf der Zeitdifferenz zwischen dem Ausreihungszeitpunkt und dem Einreihungszeitpunkt der Pufferadresse des dritten Pakets in der Warteschlange bestimmt wird, und die Netzwerkvorrichtung (100) eine Vielzahl von Latenzklassen und eine Zeitdifferenz entsprechend jeder Latenzklasse speichert.

5. Verfahren nach einem der Ansprüche 1 bis 4, wobei die Netzwerkvorrichtung (100) eine Belegungsstatustabelle des ersten Speichermediums umfasst und die Belegungsstatustabelle des ersten Speichermediums einen belegten Speicherplatz des ersten Speichermediums und einen Latenzschwellenwert entsprechend dem belegten Speicherplatz umfasst; und
das Abfragen der Nutzung des ersten Speichermediums und das Bestimmen eines ersten Latenzschwellenwerts basierend auf der Nutzung Folgendes umfasst:
Abfragen der Nutzung des ersten Speichermediums und Bestimmen des belegten Speicherplatzes entsprechend der Nutzung; und
Bestimmen, dass der Latenzschwellenwert entsprechend dem belegten Speicherplatz der erste Latenzschwellenwert ist.

6. Integriertes Schaltungssystem, umfassend ein Paketschreibsteuerungsmodul, PWC-Modul, einen Warteschlangenmanager, QM, und ein Paketspeichersteuerungsmodul, PMC-Modul, wobei das PMC-Modul ein erstes Speichermedium umfasst und das PMC-Modul mit einem zweiten Speichermedium verbunden ist;
das PWC-Modul dazu konfiguriert ist, ein erstes Paket zu empfangen und eine Warteschlangennummer des ersten Pakets zu identifizieren, wobei die Warteschlangennummer eine Warteschlange zum Speichern einer Pufferadresse des ersten Pakets angibt; und
der QM dazu konfiguriert ist: eine Warteschlangenlatenz der Warteschlange basierend auf der Warteschlangennummer abzufragen, wobei die Warteschlangenlatenz einen Überlastungsstatus der Warteschlange angibt, die Nutzung des ersten Speichermediums abzufragen, einen ersten Latenzschwellenwert basierend auf der Nutzung zu bestimmen, und, wenn der QM bestimmt, dass die Warteschlangenlatenz kleiner als der erste Latenzschwellenwert ist, erste Anzeigeinformationen an das PWC-Modul zu senden, um das PWC-Modul anzuweisen, das PMC-Modul aufzufordern, das erste Paket in dem ersten Speichermedium zu puffern, oder, wenn der QM bestimmt, dass die Warteschlangenlatenz größer als der erste Latenzschwellenwert ist, zweite Anzeigeinformationen an das PWC-Modul zu senden, um das PWC-Modul anzuweisen, das PMC-Modul aufzufordern, das erste Paket in dem zweiten Speichermedium zu puffern,
wobei
der QM ferner dazu konfiguriert ist: vor dem Senden der ersten Anzeigeinformationen oder der zweiten Anzeigeinformationen an das PWC-Modul zu bestimmen, dass ein zweites Paket in dem ersten Speichermedium gepuffert ist; und
ein Paketkopf des zweiten Pakets die Warteschlangennummer der Warteschlange umfasst und eine Pufferadresse des zweiten Pakets ein vorheriges Element ist, das in der Warteschlange eingereiht ist, in welcher die Pufferadresse des ersten Pakets eingereiht ist,
wobei
der QM ferner dazu konfiguriert ist, zu bestimmen, dass das zweite Paket in dem zweiten Speichermedium gepuffert ist;
wenn der QM bestimmt, dass die Warteschlangenlatenz kleiner als ein zweiter Latenzschwellenwert ist, der QM die ersten Anzeigeinformationen an das PWC-Modul sendet, um das PWC-Modul anzuweisen, das PMC-Modul aufzufordern, das erste Paket in dem ersten Speichermedium zu puffern; oder
wenn der QM bestimmt, dass die Warteschlangenlatenz größer als der zweite Latenzschwellenwert ist, der QM die zweiten Anzeigeinformationen an das PWC-Modul sendet, um das PWC-Modul anzuweisen, das PMC-Modul aufzufordern, das erste Paket in dem zweiten Speichermedium zu puffern; und
der zweite Latenzschwellenwert kleiner als der erste Latenzschwellenwert ist und eine Differenz zwischen dem zweiten Latenzschwellenwert und dem ersten Latenzschwellenwert ein voreingestellter Wert ist.

7. Integriertes Schaltungssystem nach Anspruch **6,** wobei die Warteschlangenlatenz der Warteschlange eine Paketlatenz eines dritten Pakets ist; und
das dritte Paket ein vorheriges Paket ist, das aus der Warteschlange ausgereiht wurde, und die Paketlatenz basierend auf einer Zeitdifferenz zwischen einem Ausreihungszeitpunkt und einem Einreihungszeitpunkt einer Pufferadresse des dritten Pakets in der Warteschlange bestimmt wird.

8. Integriertes Schaltungssystem nach Anspruch 7, wobei das integrierte Schaltungssystem ferner ein Paketlesesteuerungsmodul, PRC-Modul, umfasst, wobei das PRC-Modul eine Warteschlangenlatenztabelle der Warteschlange speichert, die Warteschlangenlatenztabelle der Warteschlange einen Einreihungszeitpunkt und einen Ausreihungszeitpunkt eines Pakets entsprechend der Warteschlange speichert und der QM die Warteschlange speichert;
das PWC-Modul ferner dazu konfiguriert ist, dem dritten Paket einen ersten Zeitstempel hinzuzufügen, bevor das PMC-Modul aufgefordert wird, das dritte Paket in dem ersten Speichermedium oder in dem zweiten Speichermedium zu puffern, wobei der erste Zeitstempel der Einreihungszeitpunkt des dritten Pakets ist;
der QM ferner dazu konfiguriert ist: der Warteschlange die Pufferadresse des dritten Pakets hinzuzufügen und, wenn der QM eine Abfrage zum Lesen des dritten Pakets empfängt, die Abfrage zum Lesen des dritten Pakets und die Pufferadresse des dritten Pakets an das PRC-Modul zu senden; und
das PRC-Modul dazu konfiguriert ist: nach dem Empfangen der Abfrage zum Lesen des dritten Pakets von dem QM das dritte Paket von dem ersten Speichermedium oder dem zweiten Speichermedium basierend auf der Pufferadresse des dritten Pakets zu lesen, den ersten Zeitstempel in dem dritten Paket zu bestimmen, einen zweiten Zeitstempel zu bestimmen und den ersten Zeitstempel und den zweiten Zeitstempel in der Warteschlangenlatenztabelle aufzuzeichnen, wobei der zweite Zeitstempel eine globale Zeit einer Netzwerkvorrichtung (100) und der Ausreihungszeitpunkt der Pufferadresse des dritten Pakets ist.

9. Integriertes Schaltungssystem nach Anspruch 7 oder 8, wobei die Paketlatenz die Zeitdifferenz zwischen dem Ausreihungszeitpunkt und dem Einreihungszeitpunkt der Pufferadresse des dritten Pakets in der Warteschlange ist; oder
die Paketlatenz eine Latenzklasse ist, die basierend auf der Zeitdifferenz zwischen dem Ausreihungszeitpunkt und dem Einreihungszeitpunkt der Pufferadresse des dritten Pakets in der Warteschlange bestimmt wird, und die Netzwerkvorrichtung (100) eine Vielzahl von Latenzklassen und eine Zeitdifferenz entsprechend jeder Latenzklasse speichert.

10. Integriertes Schaltungssystem nach einem der Ansprüche 7 bis 9, wobei das integrierte Schaltungssystem eine Belegungsstatustabelle des ersten Speichermediums speichert und die Belegungsstatustabelle des ersten Speichermediums einen belegten Speicherplatz des ersten Speichermediums und einen Latenzschwellenwert entsprechend dem belegten Speicherplatz umfasst; und
wenn der QM dazu konfiguriert ist, die Nutzung des ersten Speichermediums abzufragen und den ersten Latenzschwellenwert basierend auf der Nutzung zu bestimmen, der QM speziell dazu konfiguriert ist: die Nutzung des ersten Speichermediums abzufragen, den belegten Speicherplatz entsprechend der Nutzung zu bestimmen und zu bestimmen, dass der Latenzschwellenwert entsprechend dem belegten Speicherplatz der erste Latenzschwellenwert ist.

11. Computerlesbares Speichermedium, umfassend Computeranweisungen, welche bei Ausführung durch eine Netzwerkvorrichtung (100) bewirken, dass die Netzwerkvorrichtung (100) alle Schritte eines Verfahrens nach einem der Ansprüche 1 bis 5 durchführt.

## Revendications

1. Procédé de mise en mémoire tampon de paquets, appliqué à un dispositif réseau (100), dans lequel le dispositif réseau (100) comprend un premier support de stockage et un second support de stockage, le premier support de stockage est situé à l'intérieur d'une puce d'un processeur (110) du dispositif réseau (100), le second support de stockage est situé à l'extérieur de la puce du processeur (110), et le procédé comprend :
la réception (201) d'un premier paquet, et l'identification d'un numéro de file d'attente du premier paquet, dans lequel le numéro de file d'attente indique une file d'attente pour stocker une adresse de tampon du premier paquet ;
l'interrogation (202) d'une latence de file d'attente de la file d'attente sur la base du numéro de file d'attente, dans lequel la latence de file d'attente indique un état de congestion de la file d'attente ;
l'interrogation (203) d'une utilisation du premier support de stockage, et la détermination (204) d'un premier seuil de latence sur la base de l'utilisation ; et
la mise en mémoire tampon (205) du premier paquet dans le premier support de stockage si la latence de file d'attente est inférieure au premier seuil de latence, ou la mise en mémoire tampon (206) du premier paquet dans le second support de stockage si la latence de file d'attente est supérieure au premier seuil de latence,
dans lequel avant la mise en mémoire tampon du premier paquet dans le premier support de stockage si la latence de file d'attente est inférieure au premier seuil de latence, ou la mise en mémoire tampon du premier paquet dans le second support de stockage si la latence de file **d'attente** est supérieure au premier seuil de latence, le procédé comprend également :
le fait de déterminer qu'un deuxième paquet est mis en mémoire tampon dans le premier support de stockage, dans lequel un en-tête de paquet du deuxième paquet comprend le numéro de file d'attente de la file d'attente, et une adresse de tampon du deuxième paquet est un élément précédent mis en file d'attente dans la file **d'attente** dans laquelle **l'adresse** de tampon du premier paquet est mise en file d'attente,
dans lequel le procédé comprend également :
le fait de déterminer que le deuxième paquet est mis en mémoire tampon dans le second support de stockage ; et
la mise en mémoire tampon du premier paquet dans le premier support de stockage si la latence de file d'attente est inférieure à un second seuil de latence, ou la mise en mémoire tampon du premier paquet dans le second support de stockage si la latence de file d'attente est supérieure au second seuil de latence, dans lequel
le second seuil de latence est inférieur au premier seuil de latence, et une différence entre le second seuil de latence et le premier seuil de latence est une valeur prédéfinie.

2. Procédé selon la revendication **1,** dans lequel la latence de file d'attente de la file d'attente est une latence de paquet d'un troisième paquet ; et
le troisième paquet est un paquet précédent retiré de la file d'attente, et la latence du paquet est déterminée sur la base d'une différence de temps entre un point de temps de retrait de la file d'attente et un point de temps de mise en file d'attente d'une adresse tampon du troisième paquet dans la file d'attente.

3. Procédé selon la revendication **2,** dans lequel le dispositif réseau (100) comprend une table de latence de file **d'attente,** la table de latence de file d'attente comprend un point de temps de mise en file d'attente et un point de temps de retrait de la file d'attente d'un paquet précédent retiré de la file d'attente, et le procédé comprend également :
l'ajout d'un premier horodatage dans le troisième paquet avant de mettre en mémoire tampon le troisième paquet dans le premier support de stockage ou le second support de stockage, dans lequel le premier horodatage est le point temporel de mise en file d'attente de l'adresse de tampon du troisième paquet ;
l'ajout de l'adresse tampon du troisième paquet à la file d'attente ; et
après la réception d'une demande de lecture du troisième paquet, la lecture du troisième paquet à partir du premier support de stockage ou du second support de stockage sur la base de l'adresse de tampon, l'identification du premier horodatage dans le troisième paquet, la détermination d'un second horodatage, et l'enregistrement du premier horodatage et du second horodatage dans la table de latence de file **d'attente,** dans lequel le second horodatage est le point de temps de retrait de la file d'attente de l'adresse de tampon du troisième paquet et une heure globale du dispositif réseau (100).

4. Procédé selon la revendication 2 ou **3,** dans lequel la latence du paquet est la différence de temps entre le point de temps de retrait de la file d'attente et le point de temps de mise en file d'attente de l'adresse tampon du troisième paquet dans la file d'attente ; ou
la latence du paquet est une classe de latence déterminée sur la base de la différence de temps entre le point de temps de retrait de la file d'attente et le point de temps de mise en file d'attente de l'adresse tampon du troisième paquet dans la file d'attente, et le dispositif réseau (100) stocke une pluralité de classes de latence et une différence de temps correspondant à chaque classe de latence.

5. Procédé selon l'une quelconque des revendications 1 à **4,** dans lequel le dispositif réseau (100) comprend une table **d'état** d'occupation du premier support de stockage, et la table d'état d'occupation du premier support de stockage comprend un espace de stockage occupé et un seuil de latence correspondant à cet espace de stockage occupé ; et
l'interrogation de l'utilisation du premier support de stockage, et la détermination d'un premier seuil de latence sur la base de l'utilisation comprennent :
l'interrogation de l'utilisation du premier support de stockage, et la détermination de l'espace de stockage occupé correspondant à l'utilisation ; et
le fait de déterminer que le seuil de latence correspondant à l'espace de stockage occupé est le premier seuil de latence.

6. Système de circuit intégré, comprenant un module de commande d'écriture de paquets, PWC, un gestionnaire de files d'attente, QM, et un module de commande de mémoire de paquets, PMC, dans lequel le module PMC comprend un premier support de stockage, et le module PMC est connecté à un second support de stockage ;
le module PWC est configuré pour recevoir un premier paquet, et identifier un numéro de file d'attente du premier paquet, dans lequel le numéro de file d'attente indique une file d'attente pour stocker une adresse tampon du premier paquet ; et
Le QM est configuré pour : interroger une latence de file d'attente de la file d'attente sur la base du numéro de file d'attente, dans lequel la latence de file d'attente indique un état de congestion de la file d'attente, interroger l'utilisation du premier support de stockage, déterminer un premier seuil de latence sur la base de l'utilisation, et si le QM détermine que la latence de file d'attente est inférieure au premier seuil de latence, envoyer une première information d'indication au module PWC, pour indiquer au module PWC de demander au module PMC de mettre en mémoire tampon le premier paquet dans le premier support de stockage, ou si le QM détermine que la latence la file d'attente est supérieure au premier seuil de latence, envoyer une seconde information **d'indication** au module PWC, pour indiquer au module PWC de demander au module PMC de mettre en mémoire tampon le premier paquet dans le second support de stockage,
dans lequel
le QM est également configuré pour : avant d'envoyer les premières informations d'indication ou les secondes informations d'indication au module PWC, déterminer qu'un deuxième paquet est mis en mémoire tampon dans le premier support de stockage ; et un en-tête de paquet du deuxième paquet comprend le numéro de file d'attente de la file d'attente, et une adresse de tampon du deuxième paquet est un élément précédent mis en file d'attente dans la file **d'attente** dans laquelle **l'adresse** de tampon du premier paquet est mise en file d'attente,
dans lequel
le QM est également configuré pour déterminer que le deuxième paquet est mis en mémoire tampon dans le second support de stockage ;
si le QM détermine que la latence de file d'attente est inférieure à un second seuil de latence, le QM envoie les premières informations d'indication au module PWC, pour indiquer au module PWC de demander au module PMC de mettre en mémoire tampon le premier paquet dans le premier support de stockage ; ou
si le QM détermine que la latence de file d'attente est supérieure au second seuil de latence, le QM envoie les secondes informations d'indication au module PWC, pour indiquer au module PWC de demander au module PMC de mettre en mémoire tampon le deuxième paquet dans le premier support de stockage ; et
le second seuil de latence est inférieur au premier seuil de latence, et une différence entre le second seuil de latence et le premier seuil de latence est une valeur prédéfinie.

7. Système de circuit intégré selon la revendication **6,** dans lequel la latence de file d'attente de la file d'attente est une latence de paquet d'un troisième paquet ; et
le troisième paquet est un paquet précédent retiré de la file d'attente, et la latence du paquet est déterminée sur la base d'une différence de temps entre un point de temps de retrait de la file d'attente et un point de temps de mise en file d'attente d'une adresse tampon du troisième paquet dans la file d'attente.

8. Système de circuit intégré selon la revendication 7, dans lequel le système de circuit intégré comprend également un module de commande de lecture de paquets, PRC, le module PRC stocke une table de latence de file d'attente de la file **d'attente,** la table de latence de file **d'attente** de la file d'attente stocke un point temporel de mise en file d'attente et un point temporel de retrait de file d'attente d'un paquet correspondant à la file **d'attente,** et le QM stocke la file d'attente ;
le module PWC est également configuré pour ajouter un premier horodatage au troisième paquet avant de demander au module PMC de mettre en mémoire tampon le troisième paquet dans le premier support de stockage ou le second support de stockage, dans lequel le premier horodatage est le point temporel de mise en file d'attente du troisième paquet ;
le QM est également configuré pour : ajouter l'adresse tampon du troisième paquet à la file d'attente, et si le QM reçoit une demande de lecture du troisième paquet, envoyer la demande de lecture du troisième paquet et l'adresse tampon du troisième paquet au module PRC ; et
le module PRC est configuré pour : après la réception de la demande de lecture du troisième paquet du QM, lire le troisième paquet du premier support de stockage ou du second support de stockage en fonction de l'adresse de tampon, déterminer le premier horodatage dans le troisième paquet, déterminer un second horodatage, et enregistrer le premier horodatage et le second horodatage dans la table de latence de file d'attente, dans lequel le second horodatage est une heure globale du dispositif réseau (100), le point de temps de retrait de la file d'attente de l'adresse de tampon du troisième paquet.

9. Système de circuit intégré selon la revendication 7 ou 8, dans lequel la latence du paquet est la différence de temps entre le point de temps de retrait de la file d'attente et le point de temps de mise en file d'attente de l'adresse tampon du troisième paquet dans la file d'attente ; ou
la latence du paquet est une classe de latence déterminée sur la base de la différence de temps entre le point de temps de retrait de la file d'attente et le point de temps de mise en file d'attente de l'adresse tampon du troisième paquet dans la file d'attente, et le dispositif réseau (100) stocke une pluralité de classes de latence et une différence de temps correspondant à chaque classe de latence.

10. Système de circuit intégré selon l'une quelconque des revendications 7 à **9,** dans lequel le système de circuit intégré stocke une table **d'état d'occupation** du premier support de stockage, et la table d'état d'occupation du premier support de stockage comprend un espace de stockage occupé du premier support de stockage et un seuil de latence correspondant à l'espace de stockage occupé ; et
lorsque le QM est configuré pour interroger l'utilisation du premier support de stockage, et déterminer le premier seuil de latence sur la base de l'utilisation, le QM est spécifiquement configuré pour : interroger l'utilisation du premier support de stockage, déterminer l'espace de stockage occupé correspondant à l'utilisation, et déterminer que le seuil de latence correspondant à l'espace de stockage occupé est le premier seuil de latence.

11. Support de stockage lisible par ordinateur, comprenant des instructions informatiques, qui, lorsqu'elles sont exécutées par un dispositif réseau (100), amènent ledit dispositif réseau (100) à réaliser toutes les étapes d'un procédé selon l'une quelconque des revendications 1 à 5.
